# EUROPEAN PATENT APPLICATION

(11) **EP 4 366 363 A1**
(43) Date of publication of application: **08.05.2024**
(21) Application number: 22848168.5
(22) Date of filing: 27.06.2022
(51) Int. Cl.: H04W 24/02, H04W 24/10

(54) **NETWORK OPTIMIZATION METHOD, AND COMMUNICATION APPARATUS**

(30) Priority: 26.07.2021 CN 202110846019
(71) Applicant: Huawei Technologies Co., Ltd., Longgang Shenzhen, Guangdong 518129 (CN)
(72) Inventor: HU, Xingxing, Shenzhen, Guangdong 518129 (CN); YANG, Xudong, Shenzhen, Guangdong 518129 (CN)
(74) Representative: Pfenning, Meinig & Partner mbB
(86) International application number: PCT/CN2022/101692
(87) International publication number: WO 2023/005561

(57) **Abstract**

This application provides a network optimization method and a communication apparatus, to help improve accuracy and efficiency of network optimization, so as to improve service performance. The method includes: An access network device sends first information to a terminal device, where the first information includes application layer measurement configuration information, network slice scope information, and a service type, and the network slice scope information includes at least one network slice identifier; the terminal device receives the first information from the access network device, and performs application layer measurement based on the first information, to obtain an application layer measurement result corresponding to the first information; the terminal device sends second information to the access network device, where the second information includes the application layer measurement result and identification information corresponding to the application layer measurement result, and the identification information includes a protocol data unit PDU session identifier; and the access network device receives the second information from the terminal device.

## Description

This application claims priority to Chinese Patent Application No. 202110846019.8, filed with the China National Intellectual Property Administration on July 26, 2021 and entitled "NETWORK OPTIMIZATION METHOD AND COMMUNICATION APPARATUS", which is incorporated herein by reference in its entirety.

### TECHNICAL FIELD

This application relates to the communication field, and in particular, to a network optimization method and a communication apparatus.

### BACKGROUND

Quality of experience (quality of experience, QoE) is a performance metric, used to evaluate comprehensive subjective experience of a user on quality and performance (including validity and availability) of a device, a network, a system, an application, or a service, that is, defined in terms of degree of delight for a service application. Measurement on quality of experience is called QoE measurement (also referred to as application layer measurement). The application layer measurement may also mean that a terminal device reports quality and performance of a device, an application, or a service. An operator collects QoE measurement results (also referred to as application layer measurement results) to learn about user experience, so as to better optimize a network to improve user experience.

Currently, application layer measurement may be performed on some network slices (slices), but problems of low accuracy and efficiency of network optimization exist.

Therefore, currently, a method is urgently needed to resolve the problems of low accuracy and efficiency of network optimization.

### SUMMARY

This application provides a network optimization method, to help improve accuracy and efficiency of network optimization, so as to improve service performance.

According to a first aspect, a network optimization method is provided. The method includes: An access network device sends first information to a terminal device, where the first information includes application layer measurement configuration information, network slice scope information, and a service type, and the network slice scope information includes at least one network slice identifier; and the access network device receives second information from the terminal device, where the second information includes an application layer measurement result corresponding to the first information and identification information corresponding to the application layer measurement result, and the identification information includes an identifier of a protocol data unit PDU session.

In this embodiment of this application, when reporting the application layer measurement result to the access network device, the terminal device further reports a PDU session identifier corresponding to the application layer measurement result. Correspondingly, the access network device may learn of the application layer measurement result and the corresponding PDU session identifier based on the second information. In addition, the access network device may accurately locate a service corresponding to the application layer measurement result based on the application layer measurement result and the PDU session identifier corresponding to the application layer measurement result, and the access network device may perform configuration or scheduling optimization for only the service. Therefore, when the service is accurately located and measured in this application, efficiency and accuracy of network optimization are improved, and performance of the service is further improved.

With reference to the first aspect, in some implementations of the first aspect, the method further includes: The access network device optimizes radio resource configuration corresponding to the PDU session based on the second information.

In this embodiment of this application, the access network device may accurately locate, based on the application layer measurement result and the PDU session identifier corresponding to the application layer measurement result, the service corresponding to the application layer measurement result, thereby improving efficiency and accuracy of network optimization, and further improving performance of the service.

With reference to the first aspect, in some implementations of the first aspect, the identification information further includes at least one quality of service QoS flow identifier corresponding to the PDU session identifier. Before optimizing the radio resource configuration corresponding to the PDU session, the method further includes: The access network device determines at least one data radio bearer DRB corresponding to the at least one QoS flow identifier. Optimizing the radio resource configuration corresponding to the PDU session includes: The access network device optimizes configuration of the at least one DRB corresponding to the PDU session.

In this embodiment of this application, in addition to learning of the application layer measurement result and the corresponding PDU session identifier based on the second information, the access network device may further learn of which QoS flow in which PDU session corresponds to the application layer measurement result. Further, the access network device may obtain a corresponding DRB based on the QoS flow, and may optimize, based on the application layer measurement result, configuration or scheduling of the QoS flow or the DRB corresponding to the QoS flow, to accurately locate and measure a service and locate the service in a finer granularity. This further improves accuracy and efficiency of network optimization.

With reference to the first aspect, in some implementations of the first aspect, the second information is sent in a form of a container. After the access network device receives the second information from the terminal device, the method further includes: The access network device decodes the second information, to obtain the application layer measurement result and the identification information.

With reference to the first aspect, in some implementations of the first aspect, the application layer measurement result includes a measurement result of at least one measurement metric. The measurement metric includes at least one of the following metrics: an average throughput metric, an initial playout delay metric, a buffer level metric, a playout delay metric, a corruption duration metric, a successive loss of packets metric, a jitter duration metric, a synchronization loss duration metric, a round-trip time metric, an average codec bitrate metric, a comparable quality viewpoint switching latency metric, or a freezing metric.

With reference to the first aspect, in some implementations of the first aspect, the service type includes at least one of the following types: a multimedia telephony service type, a streaming media service type, a multimedia broadcast/multicast service type, a virtual reality service type, or an extended reality service type.

According to a second aspect, a network optimization method is provided. The method includes: A terminal device receives first information from an access network device, where the first information includes application layer measurement configuration information, a network slice scope, and a service type, and the network slice scope includes at least one network slice identifier; the terminal device performs application layer measurement based on the first information, to obtain an application layer measurement result; and the terminal device sends second information to the access network device, where the second information includes the application layer measurement result and identification information corresponding to the application layer measurement result, and the identification information includes a protocol data unit PDU session identifier.

With reference to the second aspect, in some implementations of the second aspect, the identification information further includes at least one quality of service QoS flow identifier corresponding to the PDU session identifier.

With reference to the second aspect, in some implementations of the second aspect, that the terminal device performs measurement based on the first information includes: The terminal device determines, based on the first information, an application corresponding to the at least one network slice identifier; and the terminal device measures, based on the application layer measurement configuration information, the application on a network slice corresponding to the at least one network slice identifier.

With reference to the second aspect, in some implementations of the second aspect, the second information is sent in a form of a container.

With reference to the second aspect, in some implementations of the second aspect, the application layer measurement result includes a measurement result of at least one measurement metric. The measurement metric includes at least one of the following metrics: an average throughput metric, an initial playout delay metric, a buffer level metric, a playout delay metric, a corruption duration metric, a successive loss of packets metric, a jitter duration metric, a synchronization loss duration metric, a round-trip time metric, an average codec bitrate metric, a comparable quality viewpoint switching latency metric, or a freezing metric.

With reference to the second aspect, in some implementations of the second aspect, the service type includes at least one of the following types: a multimedia telephony service type, a streaming media service type, a multimedia broadcast/multicast service type, a virtual reality service type, or an extended reality service type.

According to a third aspect, another network optimization method is provided. The method includes: An access network device sends first information to a terminal device, where the first information includes application layer measurement configuration information, network slice scope information, and a service type, and the network slice scope information includes at least one network slice identifier; the access network device receives third information from the terminal device, where the third information includes an application layer measurement result corresponding to the first information, identification information corresponding to the application layer measurement result, and service type information corresponding to the application layer measurement result, and the identification information includes the network slice identifier; and the access network device determines, based on a first correspondence and a second correspondence, an identifier of at least one protocol data unit PDU session corresponding to the network slice identifier and the service type information, where the first correspondence indicates a correspondence between a network slice identifier and a PDU session identifier, and the second correspondence indicates a correspondence between a service type and a PDU session identifier.

In this embodiment of this application, the access network device may obtain, based on the network slice identifier corresponding to the application layer measurement result reported by the terminal device and the correspondence between the service type and the PDU session identifier, at least one PDU session identifier corresponding to the application layer measurement result. On a premise that a service corresponding to the application layer measurement result is reduced, a network optimization scope is reduced, network optimization efficiency is improved, and service performance is effectively improved.

With reference to the third aspect, in some implementations of the third aspect, the method further includes: The access network device optimizes, based on the third information, radio resource configuration corresponding to the at least one PDU session.

With reference to the third aspect, in some implementations of the third aspect, the service type information includes a service type corresponding to the application layer measurement result or a configuration identifier corresponding to the application layer measurement result, and the configuration identifier indicates the service type corresponding to the application layer measurement result. That the access network device determines, based on the first correspondence and the second correspondence, at least one PDU session corresponding to the network slice identifier and the service type information includes: The access network device determines, based on the first correspondence and the network slice identifier, at least one candidate PDU session identifier; the access network device determines, based on the service type or the configuration identifier, the service type corresponding to the application layer measurement result; and the access network device determines, based on the second correspondence, the at least one candidate PDU session identifier, and the service type corresponding to the application layer measurement result, the at least one PDU session identifier corresponding to the service type.

With reference to the third aspect, in some implementations of the third aspect, the second correspondence further indicates a correspondence between a service type, a PDU session identifier, and a QoS flow identifier. Before the access network device optimizes, based on the third information, the radio resource configuration corresponding to the at least one PDU session, the method further includes: The access network device determines, based on the second correspondence, at least one QoS flow identifier corresponding to the at least one PDU session; and the access network device determines at least one data radio bearer DRB corresponding to the at least one QoS flow identifier. That the access network device optimizes, based on the third information, the radio resource configuration corresponding to the at least one PDU session includes: The access network device optimizes, the at least one DRB configuration corresponding to the at least one PDU session.

With reference to the third aspect, in some implementations of the third aspect, before the access network device sends the first information to the terminal device, the method further includes: The access network device receives the first correspondence from a core network device; and the access network device receives the second correspondence from the core network device or a management device.

With reference to the third aspect, in some implementations of the third aspect, the application layer measurement result includes a measurement result of at least one measurement metric. The measurement metric includes at least one of the following metrics: an average throughput metric, an initial playout delay metric, a buffer level metric, a playout delay metric, a corruption duration metric, a successive loss of packets metric, a jitter duration metric, a synchronization loss duration metric, a round-trip time metric, an average codec bitrate metric, a comparable quality viewpoint switching latency metric, or a freezing metric.

With reference to the third aspect, in some implementations of the third aspect, the service type includes at least one of the following types: a multimedia telephony service type, a streaming media service type, a multimedia broadcast/multicast service type, a virtual reality service type, or an extended reality service type.

According to a fourth aspect, a communication apparatus is provided. The apparatus includes a sending module and a receiving module. The sending module is configured to send first information to a terminal device. The first information includes application layer measurement configuration information, network slice scope information, and a service type, and the network slice scope information includes at least one network slice identifier. The receiving module is configured to receive second information from the terminal device. The second information includes an application layer measurement result corresponding to the first information and identification information corresponding to the application layer measurement result, and the identification information includes an identifier of a protocol data unit PDU session.

With reference to the fourth aspect, in some implementations of the fourth aspect, the apparatus further includes a processing module, and the processing module is configured to optimize, based on the second information, radio resource configuration corresponding to the PDU session.

With reference to the fourth aspect, in some implementations of the fourth aspect, the identification information further includes at least one quality of service QoS flow identifier corresponding to the PDU session identifier. The processing module is configured to: determine at least one data radio bearer DRB corresponding to the at least one QoS flow identifier; and optimize configuration of the at least one DRB corresponding to the PDU session.

With reference to the fourth aspect, in some implementations of the fourth aspect, the second information is sent in a form of a container. The processing module is configured to decode the second information to obtain the application layer measurement result and the identification information.

With reference to the fourth aspect, in some implementations of the fourth aspect, the application layer measurement result includes a measurement result of at least one measurement metric. The measurement metric includes at least one of the following metrics: an average throughput metric, an initial playout delay metric, a buffer level metric, a playout delay metric, a corruption duration metric, a successive loss of packets metric, a jitter duration metric, a synchronization loss duration metric, a round-trip time metric, an average codec bitrate metric, a comparable quality viewpoint switching latency metric, or a freezing metric.

With reference to the fourth aspect, in some implementations of the fourth aspect, the service type includes at least one of the following types: a multimedia telephony service type, a streaming media service type, a multimedia broadcast/multicast service type, a virtual reality service type, or an extended reality service type.

According to a fifth aspect, another communication apparatus is provided. The apparatus includes a receiving module, a processing module, and a sending module. The receiving module is configured to receive first information from an access network device. The first information includes application layer measurement configuration information, a network slice scope, and a service type. The network slice scope includes at least one network slice identifier. The processing module is configured to perform application layer measurement based on the first information, to obtain an application layer measurement result. The sending module is configured to send second information to the access network device. The second information includes the application layer measurement result and identification information corresponding to the application layer measurement result, and the identification information includes a protocol data unit PDU session identifier.

With reference to the fifth aspect, in some implementations of the fifth aspect, the identification information further includes at least one quality of service QoS flow identifier corresponding to the PDU session identifier.

With reference to the fifth aspect, in some implementations of the fifth aspect, the processing module is configured to: determine, based on the first information, an application corresponding to the at least one network slice identifier; and measure, based on the application layer measurement configuration information, the application on a network slice corresponding to the at least one network slice identifier.

With reference to the fifth aspect, in some implementations of the fifth aspect, the second information is sent in a form of a container.

With reference to the fifth aspect, in some implementations of the fifth aspect, the application layer measurement result includes a measurement result of at least one measurement metric. The measurement metric includes at least one of the following metrics: an average throughput metric, an initial playout delay metric, a buffer level metric, a playout delay metric, a corruption duration metric, a successive loss of packets metric, a jitter duration metric, a synchronization loss duration metric, a round-trip time metric, an average codec bitrate metric, a comparable quality viewpoint switching latency metric, or a freezing metric.

With reference to the fifth aspect, in some implementations of the fifth aspect, the service type includes at least one of the following types: a multimedia telephony service type, a streaming media service type, a multimedia broadcast/multicast service type, a virtual reality service type, or an extended reality service type.

According to a sixth aspect, still another communication apparatus is provided. The apparatus includes a sending module, a receiving module, and a processing module. The sending module is configured to send first information to a terminal device. The first information includes application layer measurement configuration information, network slice scope information, and a service type. The network slice scope information includes at least one network slice identifier. The receiving module is configured to receive third information from the terminal device. The third information includes an application layer measurement result corresponding to the first information, identification information corresponding to the application layer measurement result, and service type information corresponding to the application layer measurement result, and the identification information includes the network slice identifier. The processing module is configured to determine, based on a first correspondence and a second correspondence, an identifier of at least one protocol data unit PDU session corresponding to the network slice identifier and the service type information. The first correspondence indicates a correspondence between a network slice identifier and a PDU session identifier, and the second correspondence indicates a correspondence between a service type and a PDU session identifier.

With reference to the sixth aspect, in some implementations of the sixth aspect, the processing module is configured to optimize, based on the third information, radio resource configuration corresponding to the at least one PDU session.

With reference to the sixth aspect, in some implementations of the sixth aspect, the service type information includes a service type corresponding to the application layer measurement result or a configuration identifier corresponding to the application layer measurement result, and the configuration identifier indicates the service type corresponding to the application layer measurement result. The processing module is configured to: determine at least one candidate PDU session identifier based on the first correspondence and the network slice identifier; determine, based on the service type or the configuration identifier, the service type corresponding to the application layer measurement result; and determine, based on the second correspondence, the at least one candidate PDU session identifier, and the service type corresponding to the application layer measurement result, the at least one PDU session identifier corresponding to the service type.

With reference to the sixth aspect, in some implementations of the sixth aspect, the second correspondence further indicates a correspondence between a service type, a PDU session identifier, and a QoS flow identifier. The processing module is configured to: determine, based on the second correspondence, at least one QoS flow identifier corresponding to the at least one PDU session; determine at least one data radio bearer DRB corresponding to the at least one QoS flow identifier; and optimize configuration of the at least one DRB corresponding to the at least one PDU session.

With reference to the sixth aspect, in some implementations of the sixth aspect, the application layer measurement result includes a measurement result of at least one measurement metric. The measurement metric includes at least one of the following metrics: an average throughput metric, an initial playout delay metric, a buffer level metric, a playout delay metric, a corruption duration metric, a successive loss of packets metric, a jitter duration metric, a synchronization loss duration metric, a round-trip time metric, an average codec bitrate metric, a comparable quality viewpoint switching latency metric, or a freezing metric.

With reference to the sixth aspect, in some implementations of the sixth aspect, the service type includes at least one of the following types: a multimedia telephony service type, a streaming media service type, a multimedia broadcast/multicast service type, a virtual reality service type, or an extended reality service type.

According to a seventh aspect, another communication apparatus is provided. The apparatus includes a processor. The processor is coupled to a memory and may be configured to execute instructions in the memory, to implement the method in any possible implementation of the foregoing aspects, or the method in any possible implementation of the second aspect, or the method in any possible implementation of the third aspect. Optionally, the apparatus further includes a memory. Optionally, the apparatus further includes a communication interface, and the processor is coupled to the communication interface.

According to an eighth aspect, a processor is provided. The processor includes an input circuit, an output circuit, and a processing circuit. The processing circuit is configured to: receive a signal by using the input circuit, and transmit a signal by using the output circuit, so that the processor performs the method in any possible implementation of the first aspect, the second aspect, or the third aspect.

In a specific implementation process, the processor may be a chip, the input circuit may be an input pin, the output circuit may be an output pin, and the processing circuit may be a transistor, a gate circuit, a trigger, various logic circuits, or the like. An input signal received by the input circuit may be received and input by, for example, but not limited to, a receiver, a signal output by the output circuit may be output to, for example, but not limited to, a transmitter and transmitted by the transmitter, and the input circuit and the output circuit may be a same circuit, where the circuit is used as the input circuit and the output circuit at different moments. Specific implementations of the processor and the various circuits are not limited in embodiments of this application.

According to a ninth aspect, a processing apparatus is provided. The processing apparatus includes a processor and a memory. The processor is configured to read instructions stored in the memory, receive a signal by using a receiver, and transmit a signal by using a transmitter, to perform the method according to any one of the possible implementations of the first aspect.

Optionally, there are one or more processors, and there are one or more memories.

Optionally, the memory and the processor may be integrated together, or the memory and the processor may be separately disposed.

In a specific implementation process, the memory may be a non-transitory (non-transitory) memory, such as a read-only memory (read-only memory, ROM). The memory and the processor may be integrated into one chip, or may be separately disposed in different chips. A type of the memory and a manner in which the memory and the processor are disposed are not limited in this embodiment of this application.

It should be understood that, a related data exchange process such as sending of indication information may be a process of outputting the indication information from the processor, and receiving of capability information may be a process of receiving the input capability information by the processor. Specifically, data output by the processor may be output to a transmitter, and input data received by the processor may be from a receiver. The transmitter and the receiver may be collectively referred to as a transceiver.

The processing apparatus according to the ninth aspect may be a chip. The processor may be implemented by hardware or software. When the processor is implemented by hardware, the processor may be a logic circuit, an integrated circuit, or the like. When the processor is implemented by software, the processor may be a general-purpose processor, and is implemented by reading software code stored in a memory. The memory may be integrated into the processor, or may be located outside the processor, and exists independently.

According to a tenth aspect, this application provides a computer program product. The computer program product includes a computer program (may also be referred to as code or instructions). When the computer program is run, a computer is enabled to perform the method in any possible implementation of the first aspect, the second aspect, or the third aspect.

According to an eleventh aspect, this application provides a computer-readable storage medium. The computer-readable medium stores a computer program (may also be referred to as code or instructions). When the computer program is run on a computer, the computer is enabled to perform the method in any possible implementation of the first aspect, the second aspect, or the third aspect.

### BRIEF DESCRIPTION OF DRAWINGS

FIG. 1 is a schematic diagram of a network structure of an access network device according to an embodiment of this application;
FIG. 2 is a schematic diagram of a system architecture according to an embodiment of this application;
FIG. 3 is a schematic flowchart of an application layer measurement method for a network slice according to an embodiment of this application;
FIG. 4 is a schematic flowchart of another application layer measurement method for a network slice according to an embodiment of this application;
FIG. 5 is a schematic flowchart of a network optimization method according to an embodiment of this application;
FIG. 6 is a schematic flowchart of another network optimization method according to an embodiment of this application;
FIG. 7 is a schematic flowchart of still another network optimization method according to an embodiment of this application;
FIG. 8 is a schematic flowchart of yet another network optimization method according to an embodiment of this application;
FIG. 9 is a schematic block diagram of a communication apparatus according to an embodiment of this application;
FIG. 10 is a schematic block diagram of another communication apparatus according to an embodiment of this application;
FIG. 11 is a schematic block diagram of still another communication apparatus according to an embodiment of this application; and
FIG. 12 is a schematic block diagram of yet another communication apparatus according to an embodiment of this application.

### DESCRIPTION OF EMBODIMENTS

The following describes technical solutions of this application with reference to accompanying drawings.

The technical solutions in embodiments of this application may be applied to various communication systems, for example, a long term evolution (long term evolution, LTE) system, an LTE frequency division duplex (frequency division duplex, FDD) system, an LTE time division duplex (time division duplex, TDD) system, a universal mobile telecommunication system (universal mobile telecommunication system, UMTS), a 5th generation (5th generation, 5G) system, new radio (new radio, NR), and another evolved communication system.

A terminal device in embodiments of this application may also be referred to as user equipment (user equipment, UE), a mobile station (mobile station, MS), a mobile terminal (mobile terminal, MT), an access terminal, a subscriber unit, a subscriber station, a mobile station, a remote station, a remote terminal, a mobile device, a user terminal, a terminal, a wireless communication device, a user agent, a user apparatus, or the like.

The terminal device may be a device that provides voice/data connectivity for a user, for example, a handheld device or a vehicle-mounted device that has a wireless connection function. Currently, some terminals are, for example, a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self-driving (self-driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a hand-held device or a computing device that has a wireless communication function or another processing device connected to a wireless modem, a vehicle-mounted device, a wearable device, a terminal device in a 5G network, and a terminal device in a future evolved public land mobile network (public land mobile network, PLMN). This is not limited in embodiments of this application.

As an example instead of a limitation, in embodiments of this application, the terminal device may alternatively be a wearable device. The wearable device may also be referred to as a wearable intelligent device, and is a general term of a wearable device that is intelligently designed and developed for daily wear by using a wearable technology, for example, glasses, gloves, a watch, clothing, and shoes. The wearable device is a portable device that can be directly worn on the body or integrated into clothes or an accessory of a user. The wearable device is not only a hardware device, but also implements a powerful function through software support, data exchange, and cloud interaction. Generalized wearable intelligent devices include full-function and large-size devices that can implement complete or partial functions without depending on smartphones, such as smart watches or smart glasses, and devices that focus on only one type of application function and need to work with other devices such as smartphones, such as various smart bands or smart jewelry for monitoring physical signs.

In addition, in embodiments of this application, the terminal device may alternatively be a terminal device in an internet of things (internet of things, IoT) system. IoT is an important part of future development of information technologies. A main technical feature of the IoT is connecting things to a network by using a communication technology, to implement an intelligent network for human-machine interconnection and thing-thing interconnection. Alternatively, the terminal device in this application may be an in-vehicle unit, an in-vehicle module, an in-vehicle component, an in-vehicle chip, or an in-vehicle unit that is built in a vehicle as one or more components or units. The vehicle may implement the method in this application by using the built-in in-vehicle unit, the in-vehicle module, the in-vehicle component, the in-vehicle chip, or the in-vehicle unit. Therefore, embodiments of this application may be applied to an internet of vehicles, for example, vehicle-to-everything (vehicle-to-everything, V2X), long term evolution-vehicle (long term evolution-vehicle, LTE-V), and vehicle-to-vehicle (vehicle-to-vehicle, V2V).

In addition, an access network device in embodiments of this application may also be referred to as a radio access network device, and may be a transmission reception point (transmission reception point, TRP), or may be an evolved NodeB (evolved NodeB, eNB or eNodeB) in an LTE system, and may alternatively be a home NodeB (for example, home evolved NodeB, or home NodeB, HNB) and a base band unit (base band unit, BBU), or may be a radio controller in a cloud radio access network (cloud radio access network, CRAN) scenario. Alternatively, the access network device may be a relay station, an access point, a vehicle-mounted device, a wearable device, an access network device in a 5G network, an access network device in a future evolved PLMN network, or the like, and may be an access point (access point, AP) in a WLAN, may be a gNB in a new radio (new radio, NR) system, may be a satellite base station in a satellite communication system, or the like. This is not limited in embodiments of this application.

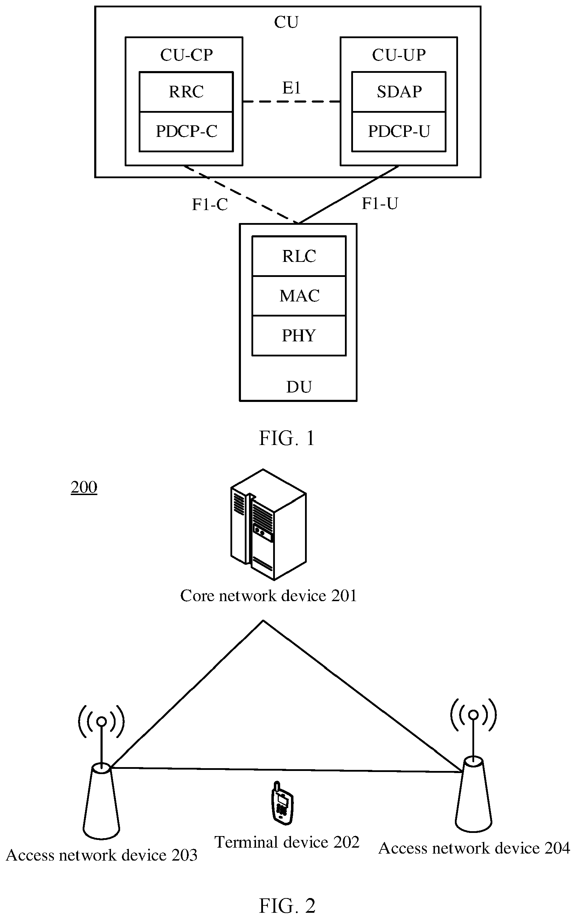

FIG. 1 shows a network structure of the access network device. As shown in FIG. 1, the access network device may be an access network device including a central unit (central unit, CU) node, or a distributed unit (distributed unit, DU) node, or a CU node and a DU node, or may be an access network device including a control plane CU node (CU-CP node), a user plane CU node (CU-UP node), and a DU node. The access network device that includes the CU node and the DU node may split protocol layers of the access network device. Functions of some protocol layers are controlled by the CU in a centralized manner, and functions of some or all protocol layers are distributed in the DU, and the CU controls the DU in a centralized manner. In an implementation, a CU deployment protocol stack includes a radio resource control (radio resource control, RRC) layer, a data convergence protocol (packet data convergence protocol, PDCP) layer, and a service data adaptation protocol (service data adaptation protocol, SDAP) layer. A DU deployment protocol stack includes a radio link control (radio link control, RLC) layer, a media access control (media access control, MAC) layer, and a physical layer (physical layer, PHY). Therefore, the CU is capable of processing RRC, a PDCP, and an SDAP. The DU is capable of processing RLC, MAC, and the PHY Division of the foregoing functions is merely an example, and constitutes no limitation on the CU and the DU. In other words, the functions may alternatively be divided between the CU and the DU in another manner. Details are not described herein in this embodiment of this application. Functions of the CU may be implemented by one entity, or may be implemented by different entities. For example, the functions of the CU may be further divided. For example, a control plane (CP) is separated from a user plane (UP), in other words, a CU control plane (CU-CP) and a CU user plane (CU-UP) are obtained. For example, the CU-CP and the CU-UP may be implemented by different function entities. The CU-CP and the CU-UP may be coupled to the DU to jointly implement functions of the access network device. In a possible implementation, the CU-CP is responsible for a control plane function, and mainly includes RRC and PDCP-C. The PDCP-C is mainly responsible for data encryption and decryption, integrity protection, data transmission, and the like on the control plane. The CU-UP is responsible for user plane functions, and mainly includes SDAP and PDCP-U. The SDAP is mainly responsible for processing data of a core network device and mapping a data flow (flow) to a bearer. The PDCP-U is mainly responsible for encryption and decryption, integrity protection, header compression, serial number maintenance, data transmission, and the like on a data plane. The CU-CP is connected to the CU-UP through an E1 interface. The CU-CP represents that the access network device is connected to the core network device through an interface between the core network device and the access network device. The CU-CP is connected to the DU through F1-C (control plane). The CU-UP is connected to the DU through Fl-U (user plane). In addition, in another possible implementation, the PDCP-C is also in the CU-UP. This is not limited in this application.

In embodiments of this application, the core network device may be a device in a core network (core network, CN) that provides service support for a terminal device. Currently, the core network device may be an access and mobility management function (access and mobility management function, AMF) entity, a session management function (session management function, SMF) entity, a user plane function (user plane function, UPF) entity, or the like. This is not listed one by one herein. The AMF entity may be responsible for access management and mobility management of the terminal device. The SMF entity may be responsible for session management, for example, session establishment of a user. The UPF entity may be a functional entity on a user plane, and is mainly responsible for a connection to an external network. It should be noted that an entity in this application may also be referred to as a network element or a functional entity. For example, the AMF entity may also be referred to as an AMF network element or an AMF functional entity. For another example, the SMF entity may also be referred to as an SMF network element or an SMF functional entity. This is not limited in this application.

FIG. 2 is a schematic diagram of a system architecture 200 according to an embodiment of this application. As shown in FIG. 2, the system architecture 200 includes a core network device 201, a terminal device 202, an access network device 203, and an access network device 204. The core network device 201 may be a core network that provides service support for the terminal device 202. The core network may provide a connection for the terminal device 202, manage the terminal device 202, and complete service bearer, and serve as a bearer network to provide an interface to an external network. The access network device 203 and the access network device 204 are mainly configured to perform cross-connection, multiplexing, and transmission between the core network device 201 and the terminal device 202. The terminal device 202 may receive a transmission resource (for example, a frequency domain resource, or a spectrum resource) by using the access network device 203 or the access network device 204, to communicate with a cell. The cell may belong to a macro base station (for example, a macro eNB or a macro gNB), or may belong to a base station corresponding to a small cell (small cell). The small cell herein may include a metro cell (metro cell), a micro cell (micro cell), a pico cell (pico cell), a femto cell (femto cell), and the like. These small cells have characteristics of small coverage and low transmit power, and are applicable to providing a high-speed data transmission service.

An operator usually performs routine network coverage drive tests every month, or performs call quality drive tests in specific areas in response to user complaints. Based on measurement results, the operator can detect and optimize problems and faults in a wireless network. To implement automatic collection of terminal measurement data, thereby improving network optimization efficiency, currently, minimization of drive-tests (minimization of drive-tests, MDT) may be used to replace the foregoing drive tests. The basic idea of this technology is that an operator performs measurement by using a commercial terminal device of a subscribed user and sends a measurement result to partially replace a traditional drive test.

Measurement types of the existing MDT technology may be classified into the following types.
1. Signal level measurement: A terminal device measures a signal level of a radio signal, and sends a measurement result to an access network device.
2. Quality of service (quality of service, QoS) measurement: Generally, an access network device performs QoS measurement, for example, traffic volume of a service, a throughput of a service, or a service delay of a service, or an uplink processing delay is measured by a terminal device. Alternatively, the access network device and the terminal device may jointly measure an air interface delay. To be specific, duration from a time when a data packet passes through an SDAP layer/PDCP layer of the access network device to a time when the data packet reaches an SDAP/PDCP layer of the terminal device is measured.
3. Accessibility measurement: A terminal device records RRC connection setup failure information, and sends the RRC connection setup failure information to an access network device.

However, for some streaming services or voice services, such as a streaming service (streaming service) and a multimedia telephony service for an IP multimedia system (multimedia telephony service for IMS, MTSI), signal quality alone cannot reflect user experience when a user uses these services. To enable an operator to better understand user experience and better optimize a network to improve user experience more accurately, currently, quality of experience (quality of experience, QoE) measurement may be used. The measurement may also be referred to as application layer measurement.

Currently, a basic process of application layer measurement is as follows: An access network device obtains application layer measurement configuration information from a core network device or a management device, and sends the application layer measurement configuration information to an access layer of a terminal device. The access layer of the terminal device sends the application layer measurement configuration information to an upper layer of the access layer of the terminal device, and the upper layer of the access layer of the terminal device receives the application layer measurement configuration information, performs measurement based on the configuration information, and sends an application layer measurement result to the access layer of the terminal device. The access layer of the terminal device sends the application layer measurement result to the access network device, and the access network device sends the application layer measurement result to a measurement collector entity (measurement collector entity, MCE) device. The measurement collector entity may also be referred to as a trace collector entity (trace collector entity, TCE). In addition, the upper layer of the access layer of the terminal device may further report some measurement metrics visible to the access network device. The access network device may optimize a radio resource based on the measurement metrics that is reported by the terminal device and that is visible to the access network device. For example, when a measurement result of a measurement metric is not ideal, the access network device may allocate more radio resources to the terminal device, or increase a scheduling priority of the terminal device. The measurement metrics visible to the access network device may be some measurement metrics in the application layer measurement result, or may be another measurement result obtained based on some measurement metrics in the application layer measurement result.

The foregoing management device may also be referred to as an operation administration and maintenance (operation administration and maintenance, OAM) device, a domain manager (domain manager) device, or an element manager (element manager) device.

In addition, to improve accuracy and efficiency of network optimization, based on the foregoing existing application layer measurement solution, an application layer measurement solution for a network slice (slice) is further proposed currently.

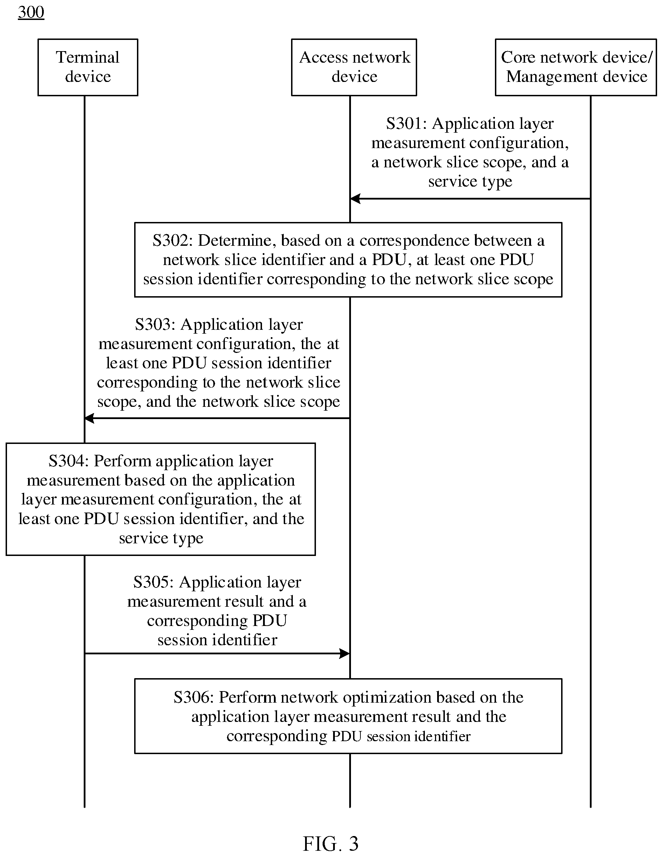

FIG. 3 shows an application layer measurement method 300 for a network slice. As shown in FIG. 3, S301: A core network device or a management device sends application layer measurement configuration information carrying a network slice scope (slice scope) and a service type (service type) (the service type may also be referred to as a service type) to an access network device. The network slice scope may include at least one network slice identifier (slice ID). The network slice identifier may be, for example, single network slice selection assistance information (single network slice selection assistance information, S-NSSAI). S302: The access network device may obtain, based on a correspondence between a network slice identifier and a PDU session identifier, at least one PDU session identifier corresponding to the network slice identifier. In a service establishment process, the core network device sends the correspondence between the PDU session identifier and the network slice identifier to the access network device. S303: The access network device delivers the application layer measurement configuration, the at least one PDU session identifier, and the service type to a terminal device. S304: The terminal device may perform measurement based on the application layer measurement configuration, the at least one PDU session identifier, and the service type. S305: The terminal device reports an application layer measurement result carrying a PDU session identifier corresponding to the application layer measurement result to the access network device. S306: The access network device may perform network optimization based on the application layer measurement result and the PDU session identifier corresponding to the application layer measurement result. In addition, the access network device may further send the network slice identifier corresponding to the PDU session identifier and the application layer measurement result to an MCE device. However, network slice identifiers are not in a one-to-one correspondence with PDU session identifiers. For example, one PDU session identifier is corresponding to one network slice identifier, but one network slice identifier may be corresponding to a plurality of PDU session identifiers. Therefore, the access network device may obtain, based on the correspondence between the network slice identifier and the PDU session identifier, all PDU session identifiers corresponding to the network slice identifier carried in the application layer measurement configuration information. However, different service types may be corresponding to a same network slice identifier, and the access network device does not know a service type corresponding to each PDU session identifier. Therefore, the obtained PDU session identifiers are more than PDU session identifiers corresponding to the network slice in this task. In other words, the access network device sends the application layer measurement configuration information and all PDU session identifiers corresponding to the network slice identifier to the terminal device, and the PDU session identifiers obtained by the terminal device has a larger scope, and therefore an original requirement of a network side is not met.

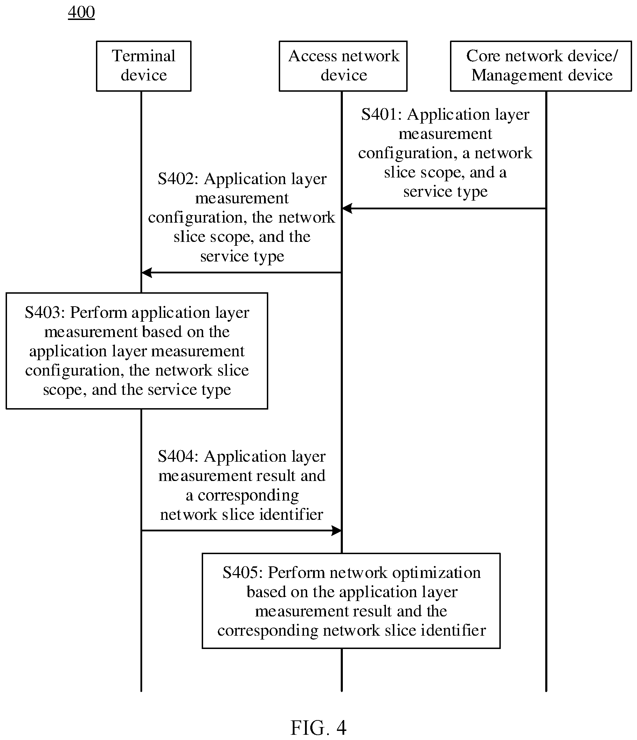

FIG. 4 shows another application layer measurement method 400 for a network slice. As shown in FIG. 4, S401: An access network device or a management device sends application layer measurement configuration carrying a network slice scope and a service type to an access network device. The network slice scope may include at least one network slice identifier. S402: The access network device sends the application layer measurement configuration, the network slice scope, and the service type to a terminal device. S403: The terminal device may perform application layer measurement based on the application layer measurement configuration, the network slice scope, and the service type. S404: The terminal device sends an application layer measurement result and a network slice identifier corresponding to the application layer measurement result to the access network device. S405: The access network device may perform network optimization based on the application layer measurement result and the corresponding network slice identifier. In addition, the access network device may further send the received application layer measurement result and the corresponding network slice identifier to an MCE device. However, because network slice identifiers and PDU session identifiers are not in a one-to-one correspondence, after the access network device receives the application layer measurement result and the network slice identifier from the terminal device, the access network device does not know which PDU session identifier corresponds to the application layer measurement result. As a result, the access network device can only perform optimization on all PDU sessions corresponding to the network slice identifier corresponding to the application layer measurement result. As a result, an optimization scope of the access network device is enlarged, in other words, network optimization cannot be accurately performed, thereby reducing optimization efficiency.

In view of this, this application provides a network optimization method. When sending the application layer measurement result to the access network device, the terminal device also sends the PDU session identifier corresponding to the application layer measurement result to the access network device, so that the access network device also obtains a PDU session corresponding to the application layer measurement result when obtaining the application layer measurement result. Then, the access network device may perform optimization on radio resource configuration or scheduling of the PDU session. In addition, the terminal device may further send an identifier of a QoS flow corresponding to the PDU session identifier when sending the PDU session identifier to the access network device, so that the access network device can perform optimization on radio resource configuration or scheduling of the QoS flow corresponding to the PDU session based on the QoS flow. Further, the access network device may further perform optimization on radio resource configuration or scheduling of a data radio bearer (data radio bearer, DRB) corresponding to the QoS flow. This helps improve accuracy and efficiency of network optimization, and further improves service performance.

To make objectives and technical solutions of this application clearer and more intuitive, the following describes in detail a network optimization method and a communication apparatus that are used in embodiments of this application with reference to accompanying drawings and embodiments. It should be understood that, specific embodiments described herein are merely used to explain this application but are not intended to limit this application.

Before the method and the apparatus provided in embodiments of this application are described, the following points are first described.

First, in embodiments shown below, terms and English acronyms, such as reference data or differential data, are examples provided for ease of description, and should not be construed as any limitation on this application. This application does not exclude a possibility of defining another term that can implement a same or similar function in an existing or future protocol.

Second, the terms "first", "second", and various numbers in the following embodiments are merely used for differentiation for ease of description, and are not intended to limit the scope of embodiments of this application.

Third, "at least one" indicates one or more, and "a plurality of" indicates two or more. The term "and/or" describes an association relationship between associated objects, and indicates that three relationships may exist. For example, A and/or B may indicate the following three cases: A exists alone, both A and B exist, and B exists alone, where A and B may be singular or plural. The character "/" generally indicates an "or" relationship between the associated objects. "At least one of the following items (pieces)" or a similar expression thereof refers to any combination of these items, including any combination of singular items (pieces) or plural items (pieces). For example, at least one of a, b, and c may indicate: a, b, c, a and b, a and c, b and c, or a, b, and c, where a, b, and c may be singular or plural.

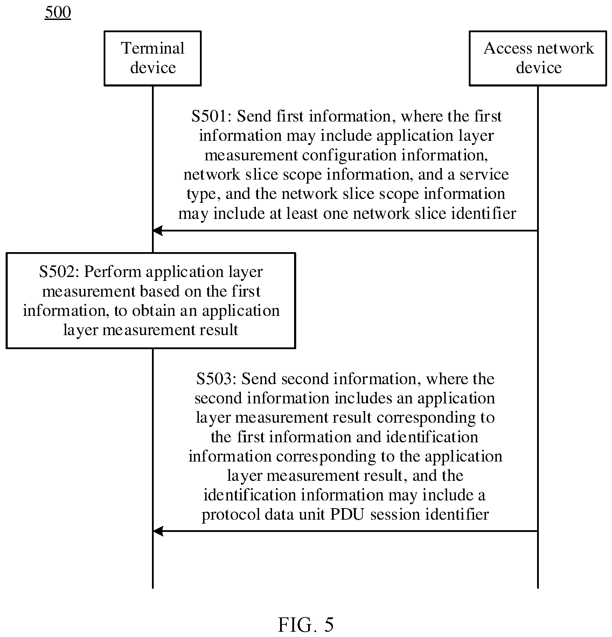

FIG. 5 is a schematic flowchart of a network optimization method 500 according to an embodiment of this application. The method 500 may be applicable to the system architecture 200 shown in FIG. 2. In addition, the method 500 may also be applicable to another architecture. This is not limited in this embodiment of this application. As shown in FIG. 5, the method 500 includes the following steps.

S501: An access network device sends first information to a terminal device. Correspondingly, the terminal device receives the first information from the access network device.

Optionally, the first information may include application layer measurement configuration information, network slice scope information, and a service type. The network slice scope information may include at least one network slice identifier.

In a possible implementation, the application layer measurement configuration information may be sent to the terminal device in a form of a container (container) (for example, in a form of a byte string). An access layer of the terminal device cannot sense information in the container, or the information in the container is invisible to the access layer of the terminal device, or for the access layer of the terminal device, the information in the container is only some byte strings, and the access layer of the terminal device does not need to sense specific meanings of these byte strings. For example, the container corresponding to the application layer measurement configuration information carries information configured in an extensible markup language (extensible markup language, XML) format.

In a possible implementation, the application layer measurement configuration information may alternatively be sent to the terminal device in a non-container form, in other words, a form (for example, a form of an information element) that can be sensed by or visible to the access layer of the terminal device.

It should be understood that the application layer measurement configuration information may indicate the terminal device to report a measurement result corresponding to a measurement metric that can be sensed by or visible to the access network device and that is specified in a protocol, or indicate the terminal device to report a measurement result corresponding to a measurement metric that can be sensed by or visible to the access network device.

It should be understood that the application layer measurement configuration information may be from a core network device or a management device, or may be generated by the access network device.

Optionally, the core network device or the management device may send the application layer measurement configuration information to the access network device in a form of a container. The access network device may directly forward the container to the terminal device without parsing content in the container (even if the access network device is capable of parsing the content). Alternatively, the application layer configuration information may be sent to the access network device in a form that can be sensed by or visible to the access network device.

Optionally, the service type may include at least one of the following types: a multimedia telephony service type, a streaming media service type, a multimedia broadcast/multicast service type, a virtual reality service type, or an extended reality service type.

Optionally, the network slice scope information may alternatively be in the application layer measurement configuration information. This is not limited in this application.

S502: The terminal device performs application layer measurement based on the first information, to obtain an application layer measurement result.

It should be understood that the application layer measurement result may include a measurement result of at least one measurement metric.

Optionally, the measurement metric may include at least one of an average throughput metric, an initial playout delay metric, a buffer level metric, a playout delay metric, a corruption duration metric, a successive loss of packets metric, a jitter duration metric, a synchronization loss duration metric, a round-trip time metric, an average codec bitrate metric, a comparable quality viewport switching latency metric, a freezing metric, a playlist metric, or the like. Optionally, a value of the measurement metric may be a specific value, or may be a range (for example, one of good, medium, and poor). For definitions of these metrics, refer to definitions in the 3GPP protocols.

Optionally, the measurement metric may alternatively be a comprehensive measurement metric of a plurality of metrics in the average throughput metric, the initial playout delay metric, the buffer level metric, the playout delay metric, the corruption duration metric, the successive loss of packets metric, the jitter duration metric, the synchronization loss duration metric, the round-trip time metric, the average codec bitrate metric, the comparable quality viewpoint switching latency metric, or the freezing metric. For example, the measurement metric may be a comprehensive metric obtained by combining the plurality of metrics according to a specific rule or a formula. A value of the comprehensive measurement metric may be a specific value, or may be a range (for example, one of good, medium, and poor).

For example, the access layer of the terminal device may send the first information to an upper layer of the access layer of the terminal device by using a password command (attention command) between the access layer of the terminal device and the upper layer of the access layer of the terminal device. The upper layer of the access layer of the terminal device may perform application layer measurement based on the first information, and obtain the application layer measurement result.

Optionally, the upper layer of the access layer of the terminal device may perform periodic measurement based on the application layer measurement configuration information, and obtain the application layer measurement result, or the corresponding application layer measurement result for the application layer measurement configuration information is generated only after the service measurement is completed.

S503: The terminal device sends second information to the access network device. Correspondingly, the access network device receives the second information from the terminal device.

Optionally, the second information includes an application layer measurement result corresponding to the first information and identification information corresponding to the application layer measurement result, and the identification information may include an identifier of a protocol data unit PDU session.

For example, when obtaining the application layer measurement result, the upper layer of the access layer of the terminal device generates the second information, and the upper layer of the access layer of the terminal device sends the second information to the access layer of the terminal device by using the password command between the access layer and the upper layer of the access layer. The access layer of the terminal device may send the second information to the access network device.

Optionally, if the terminal device receives the application layer measurement configuration information in a form of a transparent container, the application layer measurement result may be sent by the access layer of the terminal device to the access network device in the form of a container. In this case, the application layer measurement result cannot be sensed by or is not visible to the access network device (even if the access network device is capable of parsing the result). For example, the container corresponding to the application layer measurement result corresponds to some byte strings, and these byte strings carry information carried in an XML format, and the information is compressed to form these byte strings.

Optionally, if the terminal device receives the application layer measurement configuration information in a non-container manner, the application layer measurement result may be sent by the access layer of the terminal device to the access network device in the non-container form, in other words, a form (for example, a form of an information element) that can be sensed by or visible to the access network device.

Optionally, if the terminal device receives the application layer measurement configuration information in a non-container manner, the application layer measurement result may be sent by the access layer of the terminal device to the access network device in a form of a container, and content in the container may be sensed by, visible to, or parsed by the access network device. For example, the application layer measurement result carries information in an XML format, and the access network device may parse the information in the XML format, so that the application layer measurement result can be sensed by, visible to, or parsed by the access network device.

Optionally, the application layer measurement result includes two parts. One part is a measurement result corresponding to the application layer measurement configuration information received in a container manner. The other part is a measurement result corresponding to the application layer measurement configuration information received in the non-container manner, or a measurement result corresponding to the measurement metric that can be sensed by or visible to the access network device, that is specified in the protocol, and that is reported by the terminal device.

Optionally, the application layer measurement result is the measurement result corresponding to the measurement metric that can be sensed by or visible to the access network device, that is specified in the protocol, and that is reported by the terminal device.

Optionally, the identification information may further include a network slice identifier. The access network device can learn of, based on the network slice identifier, a network slice identifier corresponding to the application layer measurement result. The network slice identifier may be in the application layer measurement result (in other words, the application layer measurement result includes the network slice identifier), or may be outside of the application measurement result (in other words, the application layer measurement result does not include the network slice identifier). After the access network device receives the application layer measurement result, when sending the application layer measurement result to a measurement collector entity, the access network device further sends the network slice identifier (which may be in or outside of the application layer measurement result).

It should be understood that after the access network device obtains the second information, the access network device may further optimize, based on the second information, radio resource configuration corresponding to the PDU session.

In this embodiment of this application, when reporting the application layer measurement result to the access network device, the terminal device further reports a PDU session identifier corresponding to the application layer measurement result. Correspondingly, the access network device may learn of the application layer measurement result and the corresponding PDU session identifier based on the second information. In addition, the access network device may accurately locate a service corresponding to the application layer measurement result based on the application layer measurement result and the PDU session identifier corresponding to the application layer measurement result, and the access network device may perform configuration or scheduling optimization for only the service. Therefore, when the service is accurately located and measured in this application, efficiency and accuracy of network optimization are improved, and performance of the service is further improved.

Optionally, the first information may not include the network slice scope information, in other words, a network slice scope for performing application layer measurement is not limited.

Optionally, the identification information may further include at least one quality of service QoS flow identifier corresponding to the PDU session identifier. In addition, before the access network device optimizes the radio resource configuration corresponding to the PDU session, the access network device may further determine at least one data radio bearer DRB corresponding to the at least one QoS flow identifier. In addition, the access network device may optimize configuration of the at least one DRB.

In an optional embodiment, when the access network device includes a CU and a DU and the CU of the access network device receives the second information, and may send the second information to the DU of the access network device, the DU may learn of, based on the second information, which PDU session, or which PDU session and QoS flow correspond to the application layer measurement result, so that the DU of the access network device may optimize, based on the application layer measurement result, the corresponding PDU session or configuration or scheduling of the DRB corresponding to the QoS flow corresponding to the application layer measurement result.

In a possible implementation, when receiving the second information, the CU of the access network device may send the application layer measurement result in the second information and the DRB identifier corresponding to the QoS flow corresponding to the application layer measurement result to the DU of the access network device, so that the DU may optimize, based on the application layer measurement result, configuration or scheduling of the DRB corresponding to the QoS flow.

In a possible implementation, when receiving the second information, the CU of the access network device may obtain a combined application layer measurement result based on the application layer measurement result in the second information and an application layer measurement result that is corresponding to another QoS flow and that is reported by the terminal device. The CU of the access network device sends the combined application layer measurement result and a DRB identifier corresponding to the combined application layer measurement result to the DU of the access network device, so that the DU may optimize configuration or scheduling of the DRB based on the combined application layer measurement result. Both the QoS flow corresponding to the application layer measurement result in the second information and the another QoS flow are mapped in the DRB.

For example, when the access network device includes a CU and a DU and the CU of the access network device receives the second information, the CU of the access network device updates radio configuration information of the terminal device based on the second information, and the CU of the access network device sends updated radio configuration information (for example, an updated mapping relationship between a QoS flow and a DRB, or related QoS parameter configuration of each QoS flow) to the DU of the access network device. When the CU of the access network device includes a CU-CP and a CU-UP, the CU-CP of the access network device sends the radio configuration information to the CU-UP of the access network device.

It should be understood that the access network device may further send the PDU session identifier or the DRB identifier to an MCE, so that the MCE may find, based on the PDU session or the DRB identifier corresponding to the PDU session, a measurement result of the access layer of the terminal device corresponding to the application layer measurement result.

For example, when the access network device includes a CU and a DU, after the access network device receives the second information, the CU of the access network device may send a message to the DU. The message is used to request a peer end (that is, the DU) to send, to the MCE, an access layer measurement result (for example, a delay measurement result) corresponding to the PDU session corresponding to the application layer measurement result, or an access layer measurement result of the DRB corresponding to the PDU session corresponding to the application layer measurement result, or an access layer measurement result of the DRB corresponding to the QoS flow corresponding to the application layer measurement result. If the CU of the access network device further includes a CU-CP and a CU-UP, after the access network device receives the second information, the access network device may alternatively send a message to the CU-UP by using the CU-CP. The message is used to request a peer end (that is, the CU-UP) to send, to the MCE, the access layer measurement result (for example, the delay measurement result) corresponding to the PDU session corresponding to the application layer measurement result, or the access layer measurement result of the DRB corresponding to the PDU session corresponding to the application layer measurement result, or the access layer measurement result of the DRB corresponding to the QoS flow corresponding to the application layer measurement result.

Optionally, when the access network device sends the application layer measurement result and the corresponding PDU session identifier or the corresponding DRB identifier to the MCE, the access network device may further carry time information. The time information indicates moment information at which the access network device sends or receives the application layer measurement result. Therefore, the MCE may obtain the measurement result of the access layer of the terminal device at a corresponding moment based on the time information.

In this embodiment of this application, in addition to learning of the application layer measurement result and the corresponding PDU session identifier based on the second information, the access network device may further learn of which QoS flow in which PDU session corresponds to the application layer measurement result. Further, the access network device may obtain a corresponding DRB based on the QoS flow, and may optimize, based on the application layer measurement result, configuration or scheduling of the QoS flow or the DRB corresponding to the QoS flow, to accurately locate and measure a service and locate the service in a finer granularity. This further improves accuracy and efficiency of network optimization.

It should be understood that, due to mobility of the terminal device, the access network device that sends the first information and the access network device that receives the second information may be a same access network device, or may be different access network devices.

In the system architecture 200 shown in FIG. 2, if the access network device 203 sends the first information, and the access network device 204 receives the second information, and after the terminal device 202 receives the first information, if the terminal device 202 does not move or a moving scope is small and is still within a scope of the access network device 203 that sends the first information, and the second information is sent within the scope, it may be determined that the access network device 203 that sends the first information and the access network device 204 that receives the second information may be a same access network device. Otherwise, it may be determined that the access network device 203 that sends the first information and the access network device 204 that receives the second information are different access network devices.

Optionally, when a service corresponding to the PDU session identifier or the QoS flow identifier corresponding to the application layer measurement result is transmitted between the terminal device and at least two different access network devices, there may be two different application scenarios.

In a possible application scenario, in a multi-radio dual connectivity (multi-radio dual connectivity, MR-DC) scenario or a multi-radio multi-connectivity (multi-radio multi-connectivity) scenario, as shown in FIG. 2, in this scenario, the terminal device 202 may be connected to at least two access network devices. In this embodiment, two access network devices are used as an example, to be specific, the access network device 203 and the access network device 204. If the access network device 203 receives the application layer measurement result from the terminal device, after the access network device 203 receives the application layer measurement result, the application layer measurement result may be sent to the access network device 204, and the access network device 203 may notify the access network device 204 of a PDU session or a QoS flow corresponding to the application layer measurement result. In other words, the PDU session identifier and the QoS flow identifier that are corresponding to the application layer measurement result are sent to the access network device 204. In this application scenario, the access network device 204 may also optimize configuration or scheduling of the QoS flow or the DRB corresponding to the QoS flow based on the application layer measurement result.

In another possible application scenario, in a scenario in which the access network device 203 or the access network device 204 includes a CU/DU, the access network device 203 is used as an example in this embodiment of this application. In this scenario, the access network device 203 receives the application layer measurement result. In addition, the CU corresponding to the access network device 203 sends the application layer measurement result to the DU of the access network device 203, and the access network device 203 sends the application layer measurement result to the access network device 204. Further, the CU corresponding to the access network device 204 sends, to the DU of the access network device 204, the application layer measurement result received from the access network device. In addition, the CU of the access network device 203 may notify the DU of the access network device 203 of which PDU session, QoS flow, or DRB is corresponding to the application layer measurement result. The CU of the access network device 204 may notify the DU of the access network device 204 of which PDU session, QoS flow, or DRB is corresponding to the application layer measurement result. To be specific, the CU of the access network device 203 sends, to the DU of the access network device 203, the PDU session identifier, the QoS flow identifier, or the DRB identifier corresponding to the application layer measurement result. The CU of the access network device 204 sends, to the DU of the access network device 204, the PDU session identifier, the QoS flow identifier, or the DRB identifier corresponding to the application layer measurement result. In this way, the DU of the access network device 203 and the DU of the access network device 204 optimize, based on the application layer measurement result, configuration or scheduling of the QoS flow or the DRB corresponding to the QoS flow.

Optionally, the application layer measurement result sent by the CU corresponding to the access network device 203 to the DU of the access network device 203 may be the same as or different from the application layer measurement result sent by the access network device 203 to the access network device 204.

For example, when the foregoing sent application layer measurement results are the same, the sent application layer measurement results are application layer measurement results received from the terminal device. Optionally, indication information is further carried when the application layer measurement result is sent, and the indication information indicates that the application layer measurement result is an application layer measurement result corresponding to a split PDU session or a split bearer (split bearer). Optionally, the indication information may further indicate that replication is used for the split bearer (split bearer), to be specific, content sent on the split bearer (split bearer) in the two access network devices are the same. In this application scenario, the access network device 203 may forward the application layer measurement result received from the terminal device 202 side to another entity, which helps simplify processing complexity of the access network device 203. In addition, when replication is used for the split bearer (split bearer), because content transmitted by the terminal device 202, the access network device 203, and the access network device 204 are the same, it is equivalent that the two access network devices independently provide services for the terminal device. Therefore, sending a same application layer measurement result is more helpful for the two access network devices to separately perform configuration or scheduling optimization.

For example, when the foregoing sent application layer measurement results are different, for a throughput rate, a throughput, or a buffer level, the access network device 203 may decompose a throughput rate, a throughput, or a buffer level in the received application layer measurement result into the two access network devices based on a historical throughput rate or a throughput that corresponds to data transmission between the access network device 203 and the terminal device 202 and that is collected by the access network device 203, and a historical throughput rate or a throughput that corresponds to data transmission between the access network device 204 and the terminal device 202 and that is collected by the access network device 203. For example, the historical throughput rate or the throughput that corresponds to data transmission between the access network device 203 and the terminal device 202 and that is collected by the access network device 203 is A, the historical throughput rate or the throughput that corresponds to data transmission between the access network device 204 and the terminal device 202 and that is collected by the access network device 203 is B, and a throughput rate, a throughput, or a buffer level in the application layer measurement result received by the access network device 203 from the terminal device 202 is C. In this case, a throughput rate, a throughput, or a buffer level in the application layer measurement result sent by the CU of the access network device 203 to the DU of the access network device 203 may be C*A/(A+B), and a throughput rate, a throughput, or a buffer level in the application layer measurement result sent by the access network device 203 to the access network device 204 may be C*B/(A+B). In this case, this may be applicable to a scenario in which non-replication is used for the split bearer (split bearer). To be specific, because content transmitted between the terminal device 202 and the access network device 203 is different from content transmitted between the terminal device 202 and the access network device 204, it is equivalent that a part of data is transmitted by using the access network device 203 and the terminal device 202, and the other part of data is transmitted by using the access network device 204 and the terminal device 202. The application layer measurement result reflects an overall result of the content transmitted between the access network device 203 and the terminal device 202, and the content transmitted between the access network device 204 and the terminal device 202. Therefore, if the access network device performs configuration or scheduling optimization based on a same application layer measurement result, over-optimization is caused, and radio resources are wasted. In this embodiment, the access network device 203 decomposes the application layer measurement result received from the terminal device 202 into each access network device, thereby avoiding a waste of the radio resources.

It should be understood that in the foregoing two application scenarios, in addition to obtaining the application layer measurement result and the corresponding identification information by using S501 to S503, the access network device may alternatively obtain the application layer measurement result and the corresponding identification information by using another method. This is not limited in this application.

In an optional embodiment, the terminal device may alternatively send the second information in a form of a container. Therefore, after the access network device receives the second information from the terminal device, the access network device needs to first decode the second information to obtain the application layer measurement result and the identification information corresponding to the application layer measurement result, and can accurately locate the measured service based on the identification information, thereby implementing efficient network optimization.

Optionally, the terminal device may alternatively send only the application layer measurement result in the second information in a form of a container, and send other information in the second information in a form of a non-container. After the access network device receives the second information from the terminal device, the access network device needs to first decode the application layer measurement result in the second information, to obtain a measurement metric in the application layer measurement result, and accurately locate the measured service by using the identification information in the second information, thereby implementing efficient network optimization.

In an optional embodiment, that the terminal device performs measurement based on the first information includes: The terminal device may determine, based on the first information, a service corresponding to the at least one network slice identifier; and the terminal device may perform, based on the application layer measurement configuration information, application layer measurement on the service corresponding to the network slice corresponding to the at least one network slice identifier.

For example, if the first information includes the application layer measurement configuration information, the network slice scope information, namely, a network slice 1, and a service type 1, the access layer of the terminal device may send, to the upper layer of the access layer of the terminal device, the first information received from the access network device. The upper layer of the access layer of the terminal device may determine, based on the network slice scope in the first information, that a current measurement task is to be executed on the network slice 1, and may select, based on the service type 1, a service whose service type is the service type 1 in the network slice 1, to perform application layer measurement, and send the application layer measurement result to the access layer of the terminal device.

In addition to receiving, by the access network device, the PDU session identifier or the PDU session identifier and the corresponding QoS flow identifier from the terminal device, to perform network optimization, an embodiment of this application further provides another network optimization method. The access network device receives, from the terminal device, the application layer measurement result and the network slice identifier corresponding to the application layer measurement result. However, a difference lies in that in this embodiment of this application, the access network device may receive a correspondence between a service type and a PDU session identifier in advance, determine the PDU session identifier corresponding to the application layer measurement result, and optimize the radio resource configuration corresponding to the PDU session. Alternatively, the access network device may determine, based on a correspondence that is received in advance between a service type, a PDU session identifier, and a QoS flow corresponding to the PDU session, the PDU session identifier and the QoS flow corresponding to the application layer measurement result. In addition, when obtaining the corresponding DRB based on the QoS flow, the access network device may further optimize configuration of the DRB corresponding to the PDU session, to narrow an optimization scope, thereby improving optimization efficiency and accuracy, and further improving service performance.

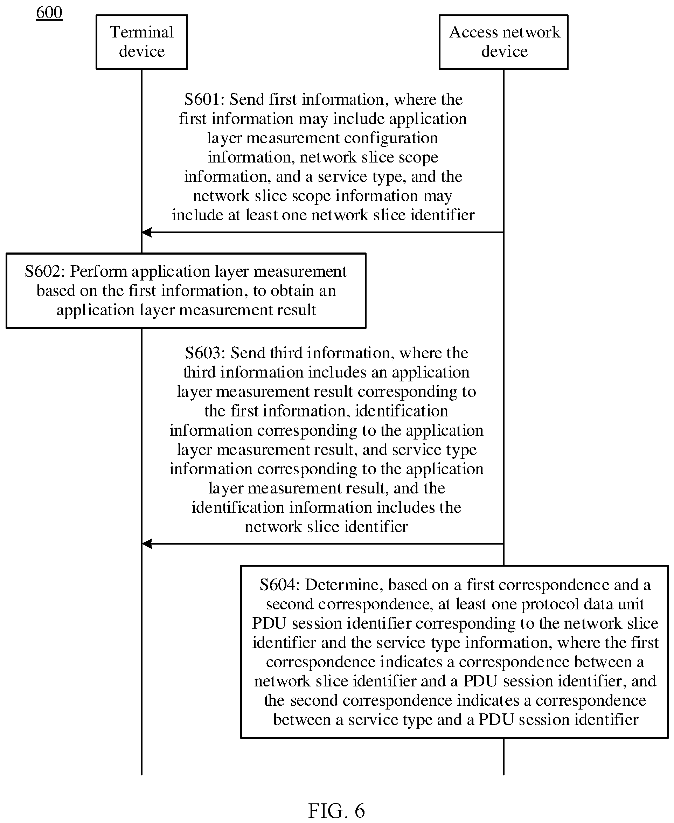

FIG. 6 is a schematic flowchart of another network optimization method 600 according to an embodiment of this application. The method 600 may also be applicable to the system architecture 200 shown in FIG. 2. In addition, the method 600 may further be applicable to another architecture. This is not limited in this embodiment of this application. As shown in FIG. 6, the method 600 includes S601 to S604, where S601 is similar to S501, and S602 is similar to S602. To avoid repetition, details are not described herein again.

S603: A terminal device sends third information to an access network device. Correspondingly, the access network device receives the third information from the terminal device.

Optionally, the third information includes an application layer measurement result corresponding to first information, identification information corresponding to the application layer measurement result, and service type information corresponding to the application layer measurement result. The identification information includes a network slice identifier.

S604: The access network device determines, based on a first correspondence and a second correspondence, an identifier of at least one protocol data unit PDU session corresponding to the network slice identifier and the service type information.

It should be understood that the first correspondence indicates a correspondence between a network slice identifier and a PDU session identifier, and the second correspondence indicates a correspondence between a service type and a PDU session identifier.

Similar to the foregoing embodiment, the access network device may further optimize, based on the third information, radio resource configuration corresponding to the at least one PDU session. In addition, due to mobility of the terminal device, an access network device that sends the first information and the access network device that receives the third information may be a same access network device, or may be different access network devices. In addition, when the access network device that sends the first information and the access network device that receives the third information are two different access network devices, this embodiment of this application may also be applicable to the foregoing two different application scenarios. To avoid repetition, details are not described herein again.

In this embodiment of this application, the access network device may obtain, based on the network slice identifier corresponding to the application layer measurement result reported by the terminal device and the correspondence between the service type and the PDU session identifier, at least one PDU session identifier corresponding to the application layer measurement result. On a premise that a service corresponding to the application layer measurement result is reduced, a network optimization scope is reduced, network optimization efficiency is improved, and service performance is effectively improved.

In an optional embodiment, the service type information includes a service type corresponding to the application layer measurement result, or a configuration identifier corresponding to the application layer measurement result. That the access network device determines, based on a first correspondence and a second correspondence, at least one PDU session corresponding to the network slice identifier and the service type information includes: The access network device determines, based on the first correspondence and the network slice identifier, at least one candidate PDU session identifier; the access network device determines, based on the service type or the configuration identifier, the service type corresponding to the application layer measurement result; and the access network device may determine, based on the second correspondence, the at least one candidate PDU session identifier, and the service type corresponding to the application layer measurement result, the at least one PDU session identifier corresponding to the application layer measurement result.

It should be understood that the configuration identifier indicates the service type corresponding to the application layer measurement result. The configuration identifier may be quality of experience reference (QoE reference) or an identifier allocated by the access network device for application layer measurement of the terminal service. The access network device may learn of, based on the configuration identifier, application layer measurement configuration corresponding to the application layer measurement result, so as to learn of a corresponding service type.

In an optional embodiment, the second correspondence may further indicate a correspondence between a service type, a PDU session identifier, and a QoS flow identifier. Before the access network device optimizes, based on the third information, the radio resource configuration corresponding to the at least one PDU session, the method further includes: The access network device may determine, based on the second correspondence, at least one QoS flow identifier corresponding to the at least one PDU session, and determine at least one data radio bearer DRB corresponding to the at least one QoS flow identifier. The access network device may optimize configuration of the at least one DRB corresponding to the at least one PDU session.

It should be understood that before the access network device sends the first information to the terminal device, the access network device receives the first correspondence from a core network device, and the access network device receives the second correspondence from the core network device or a management device.

In addition, an embodiment of this application further provides another network optimization method. A difference from the foregoing embodiment is that an access network device may determine, in advance based on a correspondence between a network slice identifier and a PDU session identifier, the PDU session identifier corresponding to application layer configuration information; or may determine, in advance based on a correspondence between a network slice identifier, a PDU session identifier, and a QoS flow identifier, the PDU session identifier and the QoS flow identifier that correspond to application layer configuration information. Then, the access network device sends the determined PDU session identifier or the PDU session identifier and the corresponding QoS flow identifier to a terminal device. After receiving the PDU session identifier or the PDU session identifier and the corresponding QoS flow identifier, the terminal device may determine a measurement scope corresponding to application layer measurement configuration, and the scope is smaller than the scope in the foregoing embodiment. Therefore, application layer measurement efficiency of the terminal device is improved. In addition, when sending an application layer measurement result to the access network device, the terminal device further sends the PDU session identifier corresponding to the application layer measurement result, or the PDU session identifier and the QoS flow identifier corresponding to the PDU session identifier, so that the access network device can accurately locate a service, thereby improving network optimization efficiency and accuracy.

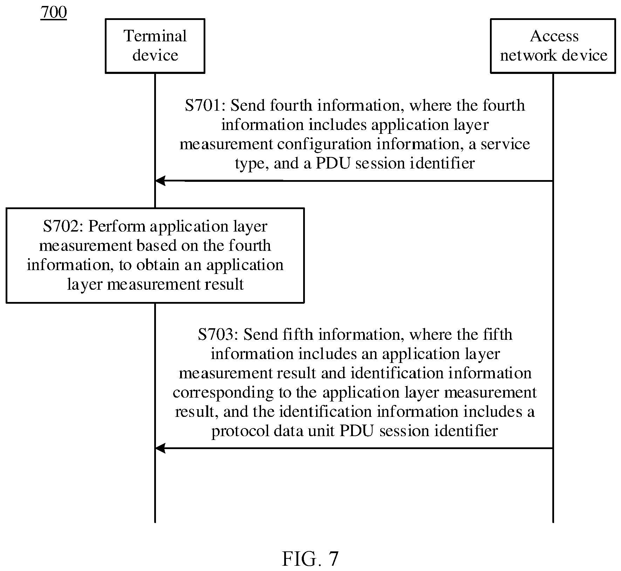

FIG. 7 is a schematic flowchart of still another network optimization method 700 according to an embodiment of this application. The method 700 may also be applicable to the system architecture 200 shown in FIG. 2. In addition, the method 700 may further be applicable to another architecture. This is not limited in this embodiment of this application. As shown in FIG. 7, the method 700 includes the following steps.

S701: An access network device sends fourth information to a terminal device. Correspondingly, the terminal device receives the fourth information from the access network device.

Optionally, the fourth information includes application layer measurement configuration information, a service type, and a PDU session identifier.

It should be understood that, for description of the application layer measurement configuration information, refer to the description in the foregoing embodiment. To avoid repetition, details are not described herein again.

For example, when the access network device receives the application measurement configuration information, corresponding network slice scope information, and the service type from a core network device or a management device, the access network device may determine, based on a first correspondence and a second correspondence, at least one PDU session identifier that is in the fourth information and that is corresponding to the network slice scope and the service type. In addition, an access layer of the terminal device may receive the fourth information from the access network device, and may send the fourth information to an upper layer of the access layer of the terminal device by using a password command between the access layer and the upper layer of the access layer.

It should be understood that for descriptions of the first correspondence and the second correspondence, refer to the descriptions in the foregoing embodiments. To avoid repetition, details are not described herein again.

S702: The terminal device performs application layer measurement based on the fourth information, to obtain an application layer measurement result.

For example, the upper layer of the access layer of the terminal device receives the fourth information, and may perform application layer measurement based on the fourth information to obtain the application layer measurement result.

Optionally, the upper layer of the access layer of the terminal device may perform periodic measurement based on the application layer measurement configuration information, and obtain the application layer measurement result, or the corresponding application layer measurement result for the application layer measurement configuration information is generated only after the service measurement is completed.

S703: The terminal device sends fifth information to an access network device. Correspondingly, the access network device receives the fifth information from the terminal device.

Optionally, the fifth information may include the application layer measurement result and identification information corresponding to the application layer measurement result. The identification information includes a protocol data unit PDU session identifier. For description of the application layer measurement result, refer to the description in the foregoing embodiments. To avoid repetition, details are not described herein again.

For example, the upper layer of the access layer of the terminal device sends the fifth information to the access layer of the terminal device by using the password command between the access layer and the upper layer of the access layer, and the access layer of the terminal device sends the fifth information to the access network device.

Similar to the foregoing embodiment, after the access network device obtains the fifth information, the access network device may further optimize, based on the fifth information, radio resource configuration corresponding to the PDU session. Due to mobility of the terminal device, the access network device that sends the fourth information and the access network device that receives the fifth information may be a same access network device, or may be different access network devices. In addition, when the access network device that sends the fourth information and the access network device that receives the fifth information are different access network devices, this embodiment of this application may also be applicable to the foregoing two application scenarios. To avoid repetition, details are not described herein again.

In this embodiment of this application, the access network device may determine, based on the first correspondence and the second correspondence, a PDU session identifier corresponding to at least one network slice identifier in the network slice scope information corresponding to the application layer measurement configuration. In addition, the at least one PDU session identifier and the application layer measurement configuration may be sent to the terminal device, so that the terminal device accurately knows a measurement scope corresponding to the application layer measurement configuration, and the PDU session identifier corresponding to the application layer measurement result is further sent when the application layer measurement result is sent to the access network device. In this way, the access network device can accurately locate and measure a service, thereby improving efficiency and accuracy of network optimization, and further improving performance of the measured service.

Similarly, the identification information may further include at least one quality of service QoS flow identifier corresponding to the PDU session identifier. In addition, before the access network device optimizes the radio resource configuration corresponding to the PDU session, the access network device may further determine at least one data radio bearer DRB corresponding to the at least one QoS flow identifier, and the access network device may optimize configuration of the at least one DRB. To avoid repetition, details are not described herein again.

In an optional embodiment, after the access network device obtains the application layer measurement result, the PDU session identifier corresponding to the application layer measurement result, and the at least one QoS flow corresponding to the PDU session identifier, in addition to performing network optimization based on the PDU session and the at least one QoS flow corresponding to the PDU session, the access network device may further perform network optimization by using the core network device.

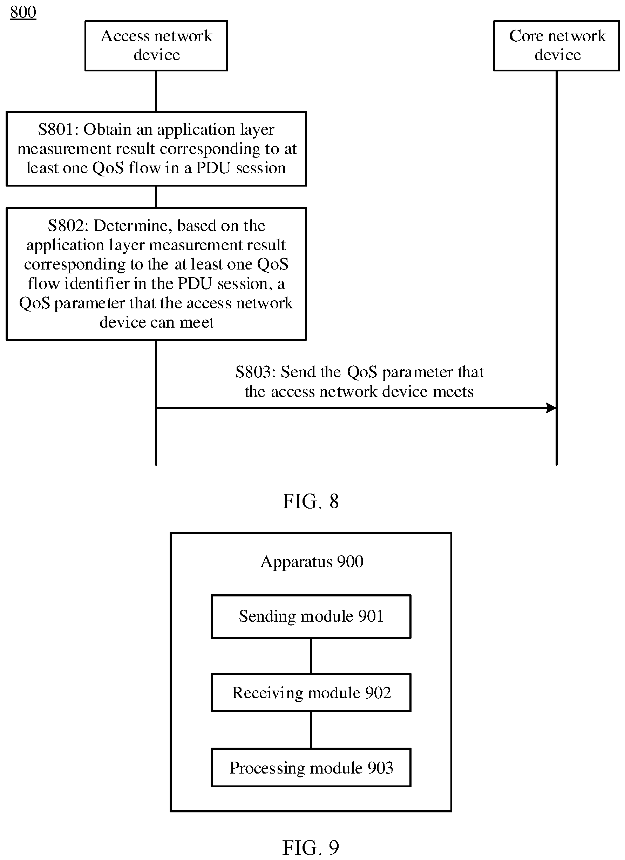

FIG. 8 shows yet another network optimization method 800 according to an embodiment of this application. As shown in FIG. 8, the method includes the following steps.

S801: An access network device obtains an application layer measurement result corresponding to at least one QoS flow in a PDU session.

It should be understood that the access network device may obtain the application layer measurement result corresponding to the at least one QoS flow in the PDU session by using the foregoing embodiment, or may obtain the application layer measurement result by using another method. This is not limited in this embodiment.

S802: The access network device determines, based on the application layer measurement result corresponding to the at least one QoS flow in the PDU session, a QoS parameter that can be met by the access network device.

It should be understood that when a core network device indicates the access network device to allocate a corresponding radio resource to the at least one QoS flow in the PDU session, the core network device sends, to the access network device, a plurality of sets of QoS parameters respectively corresponding to the at least one QoS flow. The access network device may determine, based on the QoS parameters delivered by the core network device, a QoS parameter that can be met when the current access network device can provide a communication service for each of the at least one QoS flow.

For example, the plurality of sets of QoS parameters may be carried in a PDU session resource establishment requirement sent by the core network device to the access network device.

Optionally, each set of QoS parameters may have a corresponding uplink guaranteed bit rate, a downlink guaranteed bit rate, a packet delay budget, a packet error bit, and the like, and each set of QoS parameters has one index.

S803: The access network device sends, to the core network device, the QoS parameter that can be currently met by the access network device.

It should be understood that the access network device may send, to the core network device, the index corresponding to the QoS parameter that can be met.

Optionally, the access network device may carry the index corresponding to the QoS parameter to a PDU session resource notification (PDU session resource notify) message sent to the core network device. Alternatively, in a handover scenario, when the access network device is used as a target access network device, the index corresponding to the QoS parameter is carried in path switch request transmission. Alternatively, when the core network device indicates the access network device to establish the at least one QoS flow or modify the QoS parameters of the at least one QoS flow, a response sent by the access network device to the core network device carries the index corresponding to the QoS parameter.

For example, it is assumed that the current access network device provides a communication service for a terminal device by using a QoS parameter #1 corresponding to a QoS flow 1, and when a throughput rate or a throughput reported in the application layer measurement result does not meet a requirement corresponding to the current QoS parameter #1. To be specific, a downlink throughput rate reported in the application layer measurement result is A, a downlink bit rate corresponding to the current QoS parameter #1 is B, and A<B. In this case, the access network device may send, to the core network device, another set of QoS parameters that can satisfy the throughput rate or the throughput reported in the current application layer measurement result, for example, a QoS parameter #2. An uplink bit rate and a downlink bit rate corresponding to the QoS parameter #2 are less than or equal to the throughput rate reported in the application layer measurement result, to be specific, the downlink bit rate corresponding to the QoS parameter #2 may be C, and C≤A.

For example, it is assumed that the current access network device provides the communication service for the terminal device by using the QoS parameter #1 corresponding to the QoS flow 1, and when a playout delay reported in the application layer measurement result does not meet the requirement corresponding to the current QoS parameter #1, to be specific, the playout delay reported in the application layer measurement result is D, a packet delay budget corresponding to the current QoS parameter #1 is E, and D>E. In this case, the access network device may send another set of QoS parameters to the core network device, for example, the QoS parameter #2. A packet delay budget corresponding to the set of QoS parameters is higher than or equal to the playout delay reported in the application layer measurement result, to be specific, the packet delay budget corresponding to the QoS parameter #2 may be F, and F>D.

Optionally, the access network device may also send a message to the terminal device, to notify the terminal device of a QoS parameter that can be currently met or notify the terminal device of configuration information. The configuration information is corresponding to the QoS parameter that can be currently met.

Optionally, the core network device adjusts, based on the QoS parameter that can be currently met and that is sent by the access network device, a resource allocated to the terminal device.

For example, the core network device may control a rate of sending data to the access network device, or the like, or the core network device indicates a server corresponding to the terminal device to adjust a rate of sending data to the terminal device or adjust a performance requirement of sending a service to the terminal device. In this way, the resource allocated to the terminal device is adjusted.

In this embodiment of this application, the access network device can obtain, by using the application layer measurement result, the QoS parameter that can be currently met by the access network device, and adjust and allocate a radio resource to the terminal device based on the QoS parameter. Alternatively, the access network device may send the QoS parameter to the core network device. In this way, the core network device adjusts and allocates resources to the terminal device.

It should be understood that steps in the foregoing embodiments may also be coupled to each other. This is not limited in this application. Sequence numbers of the foregoing processes do not mean execution sequences. The execution sequences of the processes should be determined based on functions and internal logic of the processes, and should not be construed as any limitation on the implementation processes of embodiments of this application.

The foregoing describes in detail the network optimization methods in embodiments of this application with reference to FIG. 3 to FIG. 8. The following describes in detail communication apparatuses in embodiments of this application with reference to FIG. 9 to FIG. 12.

FIG. 9 shows a communication apparatus 900 according to an embodiment of this application. The apparatus 900 includes a sending module 901 and a receiving module 902.

The sending module 901 is configured to send first information to a terminal device. The first information includes application layer measurement configuration information, network slice scope information, and a service type, and the network slice scope information includes at least one network slice identifier. The receiving module 902 is configured to receive second information from the terminal device. The second information includes an application layer measurement result corresponding to the first information and identification information corresponding to the application layer measurement result, and the identification information includes an identifier of a protocol data unit PDU session.

Optionally, the apparatus further includes a processing module 903. The processing module 903 is configured to optimize, based on the second information, radio resource configuration corresponding to the PDU session.

Optionally, the identification information further includes at least one quality of service QoS flow identifier corresponding to the PDU session identifier. The processing module 903 is configured to determine at least one data radio bearer DRB corresponding to the at least one QoS flow identifier; and optimize configuration of the at least one DRB corresponding to the PDU session.

Optionally, the second information is sent in a form of a container. The processing module 903 is configured to decode the second information to obtain the application layer measurement result and the identification information.

Optionally, the application layer measurement result includes a measurement result of at least one measurement metric. The measurement metric includes at least one of the following metrics: an average throughput metric, an initial playout delay metric, a buffer level metric, a playout delay metric, a corruption duration metric, a successive loss of packets metric, a jitter duration metric, a synchronization loss duration metric, a round-trip time metric, an average codec bitrate metric, a comparable quality viewpoint switching latency metric, or a freezing metric.

Optionally, the service type includes at least one of the following types: a multimedia telephony service type, a streaming media service type, a multimedia broadcast/multicast service type, a virtual reality service type, or an extended reality service type.

It should be understood that the apparatus 900 herein is presented in a form of a functional module. The term "module" herein may be an application-specific integrated circuit (application-specific integrated circuit, ASIC), an electronic circuit, a processor (for example, a shared processor, a dedicated processor, or a group processor) configured to execute one or more software or firmware programs, a memory, a combinational logic circuit, and/or another appropriate component that supports the described functions. In an optional example, a person skilled in the art may understand that the apparatus 900 may be specifically the access network device in the foregoing embodiment, or a function of the access network device in the foregoing embodiment may be integrated into the apparatus 900. The apparatus 900 may be configured to perform procedures and/or steps corresponding to the access network device in the foregoing method embodiment. To avoid repetition, details are not described herein again.

The apparatus 900 has a function for implementing corresponding steps performed by the access network device in the foregoing method. The function may be implemented by hardware, or may be implemented by hardware executing corresponding software. The hardware or the software includes one or more modules corresponding to the function.

In this embodiment of this application, the apparatus 900 in FIG. 9 may alternatively be a chip or a chip system, for example, a system on chip (system on chip, SoC).

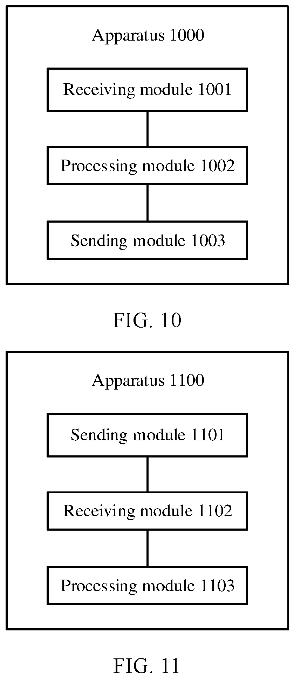

FIG. 10 shows another communication apparatus 1000 according to an embodiment of this application. The apparatus 1000 includes a receiving module 1001, a processing module 1002, and a sending module 1003.

The receiving module 1001 is configured to receive first information from an access network device. The first information includes application layer measurement configuration information, a network slice scope, and a service type, and the network slice scope includes at least one network slice identifier. The processing module 1002 is configured to perform application layer measurement based on the first information, to obtain an application layer measurement result. The sending module 1003 is configured to send second information to the access network device. The second information includes the application layer measurement result and identification information corresponding to the application layer measurement result, and the identification information includes a protocol data unit PDU session identifier.

Optionally, the identification information further includes at least one quality of service QoS flow identifier corresponding to the PDU session identifier.

Optionally, the processing module 1002 is configured to determine, based on the first information, an application corresponding to the at least one network slice identifier; and measure, based on the application layer measurement configuration information, the application on a network slice corresponding to the at least one network slice identifier.

Optionally, the second information is sent in a form of a container.

Optionally, the application layer measurement result includes a measurement result of at least one measurement metric. The measurement metric includes at least one of the following metrics: an average throughput metric, an initial playout delay metric, a buffer level metric, a playout delay metric, a corruption duration metric, a successive loss of packets metric, a jitter duration metric, a synchronization loss duration metric, a round-trip time metric, an average codec bitrate metric, a comparable quality viewpoint switching latency metric, or a freezing metric.

Optionally, the service type includes at least one of the following types: a multimedia telephony service type, a streaming media service type, a multimedia broadcast/multicast service type, a virtual reality service type, or an extended reality service type.

It should be understood that the apparatus 1000 herein is presented in a form of a functional module. The term "module" herein may be an application-specific integrated circuit (application-specific integrated circuit, ASIC), an electronic circuit, a processor (for example, a shared processor, a dedicated processor, or a group processor) configured to execute one or more software or firmware programs, a memory, a combinational logic circuit, and/or another appropriate component that supports the described functions. In an optional example, a person skilled in the art may understand that the apparatus 1000 may be specifically the terminal device in the foregoing embodiment, or a function of the terminal device in the foregoing embodiment may be integrated into the apparatus 1000. The apparatus 1000 may be configured to perform procedures and/or steps corresponding to the terminal device in the foregoing method embodiment. To avoid repetition, details are not described herein again.

The apparatus 1000 has a function for implementing corresponding steps performed by the terminal device in the foregoing method. The function may be implemented by hardware, or may be implemented by hardware executing corresponding software. The hardware or the software includes one or more modules corresponding to the function.

In this embodiment of this application, the apparatus 1000 in FIG. 10 may alternatively be a chip or a chip system, for example, a system on chip (system on chip, SoC).

FIG. 11 shows another communication apparatus 1100 according to an embodiment of this application. The apparatus 1100 includes a sending module 1101, a receiving module 1102, and a processing module 1103.

The sending module 1101 is configured to send first information to a terminal device. The first information includes application layer measurement configuration information, network slice scope information, and a service type, and the network slice scope information includes at least one network slice identifier. The receiving module 1102 is configured to receive third information from the terminal device. The third information includes an application layer measurement result corresponding to the first information, identification information corresponding to the application layer measurement result, and service type information corresponding to the application layer measurement result. The identification information includes the network slice identifier. The processing module 1103 is configured to determine, based on a first correspondence and a second correspondence, at least one protocol data unit PDU session identifier corresponding to the network slice identifier and the service type information. The first correspondence indicates a correspondence between a network slice identifier and a PDU session identifier, and the second correspondence indicates a correspondence between a service type and a PDU session identifier.

Optionally, the processing module 1103 is configured to optimize, based on the third information, radio resource configuration corresponding to the at least one PDU session.

Optionally, the service type information includes a service type corresponding to the application layer measurement result or a configuration identifier corresponding to the application layer measurement result, and the configuration identifier indicates the service type corresponding to the application layer measurement result. The processing module 1103 is configured to: determine at least one candidate PDU session identifier based on the first correspondence and the network slice identifier; determine, based on the service type or the configuration identifier, the service type corresponding to the application layer measurement result; and determine, based on the second correspondence, the at least one candidate PDU session identifier, and the service type corresponding to the application layer measurement result, the at least one PDU session identifier corresponding to the service type.

Optionally, the second correspondence further indicates a correspondence between a service type, a PDU session identifier, and a QoS flow identifier. The processing module 1103 is configured to: determine, based on the second correspondence, at least one QoS flow identifier corresponding to the at least one PDU session; determine at least one data radio bearer DRB corresponding to the at least one QoS flow identifier; and optimize configuration of the at least one DRB corresponding to the at least one PDU session.

Optionally, the application layer measurement result includes a measurement result of at least one measurement metric. The measurement metric includes at least one of the following metrics: an average throughput metric, an initial playout delay metric, a buffer level metric, a playout delay metric, a corruption duration metric, a successive loss of packets metric, a jitter duration metric, a synchronization loss duration metric, a round-trip time metric, an average codec bitrate metric, a comparable quality viewpoint switching latency metric, or a freezing metric.

Optionally, the service type includes at least one of the following types: a multimedia telephony service type, a streaming media service type, a multimedia broadcast/multicast service type, a virtual reality service type, or an extended reality service type.

It should be understood that the apparatus 1100 herein is presented in a form of a functional module. The term "module" herein may be an application-specific integrated circuit (application-specific integrated circuit, ASIC), an electronic circuit, a processor (for example, a shared processor, a dedicated processor, or a group processor) configured to execute one or more software or firmware programs, a memory, a combinational logic circuit, and/or another appropriate component that supports the described functions. In an optional example, a person skilled in the art may understand that the apparatus 1100 may be specifically the access network device in the foregoing embodiment, or a function of the access network device in the foregoing embodiment may be integrated into the apparatus 1100. The apparatus 1100 may be configured to perform procedures and/or steps corresponding to the access network device in the foregoing method embodiment. To avoid repetition, details are not described herein again.

The apparatus 1100 has a function for implementing corresponding steps performed by the access network device in the foregoing method. The function may be implemented by hardware, or may be implemented by hardware executing corresponding software. The hardware or the software includes one or more modules corresponding to the function.

In this embodiment of this application, the apparatus 1100 in FIG. 11 may alternatively be a chip or a chip system, for example, a system on chip (system on chip, SoC).

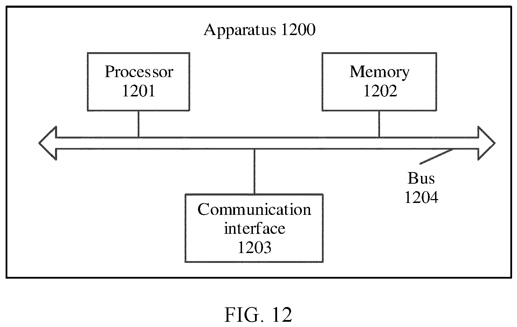

FIG. 12 shows another communication apparatus 1200 according to an embodiment of this application. The apparatus 1200 includes a processor 1201, a memory 1202, a communication interface 1203, and a bus 1204. The memory 1202 is configured to store instructions, and the processor 1201 is configured to execute the instructions stored in the memory 1202. The processor 1201, the memory 1202, and the communication interface 1203 communicate with each other through the bus 1204.

In a first implementation, the apparatus 1200 may be specifically the access network device in the foregoing embodiment. The processor 1201 is configured to: send first information to a terminal device, where the first information includes application layer measurement configuration information, network slice scope information, and a service type, and the network slice scope information includes at least one network slice identifier; and receive second information from the terminal device, where the second information includes an application layer measurement result corresponding to the first information and identification information corresponding to the application layer measurement result, and the identification information includes a protocol data unit PDU session identifier.

In a second implementation, the apparatus 1200 may be specifically the access network device in the foregoing embodiment. The processor 1201 is configured to: send first information to a terminal device, where the first information includes application layer measurement configuration information, network slice scope information, and a service type, and the network slice scope information includes at least one network slice identifier; receive third information from the terminal device, where the third information includes an application layer measurement result corresponding to the first information, identification information corresponding to the application layer measurement result, and service type information corresponding to the application layer measurement result, and the identification information includes the network slice identifier; and determine, based on a first correspondence and a second correspondence, at least one protocol data unit PDU session identifier corresponding to the network slice identifier and the service type information, where the first correspondence indicates a correspondence between a network slice identifier and a PDU session identifier, and the second correspondence indicates a correspondence between a service type and a PDU session identifier.

In a third implementation, the apparatus 1200 may be specifically the terminal device in the foregoing embodiment. The processor 1201 is configured to: receive first information from an access network device, where the first information includes application layer measurement configuration information, a network slice scope, and a service type, and the network slice scope includes at least one network slice identifier; perform application layer measurement based on the first information, to obtain an application layer measurement result; and send second information to the access network device, where the second information includes the application layer measurement result and identification information corresponding to the application layer measurement result, and the identification information includes a protocol data unit PDU session identifier.

It should be understood that the apparatus 1200 may be specifically the access network device or the terminal device in the foregoing embodiment, or functions of the access network device or the terminal device in the foregoing embodiment may be integrated into the apparatus 1200. The apparatus 1200 may be configured to perform steps and/or procedures corresponding to the access network device or the terminal device in the foregoing method embodiments.

Optionally, the memory 1202 may include a read-only memory and a random access memory, and provide instructions and data for the processor 1201. Apart of the memory 1202 may further include a nonvolatile random access memory. For example, the memory 1202 may further store information of a device type. The processor 1201 may be configured to execute the instructions stored in the memory, and when the processor executes the instructions, the processor 1201 may perform steps and/or procedures corresponding to an encoder side or a decoder side in the foregoing method embodiment.

It should be understood that in embodiments of this application, the processor may be a central processing unit (Central Processing Unit, CPU), or the processor may be another general-purpose processor, a digital signal processor (DSP), an application-specific integrated circuit (ASIC), a field programmable gate array (FPGA), or another programmable logic device, discrete gate or transistor logic device, discrete hardware component, or the like. The general-purpose processor may be a microprocessor, or the processor may be any conventional processor, or the like.

In an implementation process, steps in the foregoing methods can be implemented by using a hardware integrated logical circuit in the processor, or by using instructions in a form of software. The steps of the method disclosed with reference to embodiments of this application may be directly performed by a hardware processor, or may be performed by using a combination of hardware in the processor and a software module. The software module may be located in a mature storage medium in the art, such as a random access memory, a flash memory, a read-only memory, a programmable read-only memory, an electrically erasable programmable memory, or a register. The storage medium is located in the memory, and the processor reads instructions in the memory and completes the steps in the foregoing methods in combination with hardware of the processor. To avoid repetition, details are not described herein again.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or the communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on an actual requirement to achieve the objectives of the solutions of embodiments.

In addition, functional units in embodiments of this application may be integrated into one processing unit, each of the units may exist alone physically, or two or more units are integrated into one unit.

When the functions are implemented in a form of a software functional unit and sold or used as an independent product, the functions may be stored in a computer-readable storage medium. Based on this understanding, the technical solutions of this application may be implemented in a form of a software product. The software product is stored in a storage medium, and includes several instructions for instructing a computer device (which may be a personal computer, a server, or a network device) to perform all or some of the steps of the methods described in the embodiments. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A network optimization method, comprising:
sending, by an access network device, first information to a terminal device, wherein the first information comprises application layer measurement configuration information, network slice scope information, and a service type, and the network slice scope information comprises at least one network slice identifier; and
receiving, by the access network device, second information from the terminal device, wherein the second information comprises an application layer measurement result corresponding to the first information and identification information corresponding to the application layer measurement result, and the identification information comprises an identifier of a protocol data unit PDU session.

2. The method according to claim 1, wherein the method further comprises:
optimizing, by the access network device based on the second information, radio resource configuration corresponding to the PDU session.

3. The method according to claim 2, wherein the identification information further comprises at least one quality of service QoS flow identifier corresponding to the PDU session identifier;
before the optimizing radio resource configuration corresponding to the PDU session, the method further comprises:
determining, by the access network device, at least one data radio bearer DRB corresponding to the at least one QoS flow identifier; and
the optimizing radio resource configuration corresponding to a PDU session comprises:
optimizing, by the access network device, configuration of the at least one DRB corresponding to the PDU session.

4. The method according to claim 1, wherein the second information is sent in a form of a container; and
after the receiving, by the access network device, second information from the terminal device, the method further comprises:
decoding, by the access network device, the second information to obtain the application layer measurement result and the identification information.

5. The method according to any one of claims 1 to 4, wherein the application layer measurement result comprises a measurement result of at least one measurement metric; and
the measurement metric comprises at least one of the following metrics:
an average throughput metric, an initial playout delay metric, a buffer level metric, a playout delay metric, a corruption duration metric, a successive loss of packets metric, a jitter duration metric, a synchronization loss duration metric, a round-trip time metric, an average codec bitrate metric, a comparable quality viewpoint switching latency metric, or a freezing metric.

6. The method according to any one of claims 1 to 5, wherein the service type comprises at least one of the following types:
a multimedia telephony service type, a streaming media service type, a multimedia broadcast/multicast service type, a virtual reality service type, or an extended reality service type.

7. A network optimization method, comprising:
receiving, by a terminal device, first information from an access network device, wherein the first information comprises application layer measurement configuration information, a network slice scope, and a service type, and the network slice scope comprises at least one network slice identifier;
performing, by the terminal device, application layer measurement based on the first information, to obtain an application layer measurement result; and
sending, by the terminal device, second information to the access network device, wherein the second information comprises the application layer measurement result and identification information corresponding to the application layer measurement result, and the identification information comprises a protocol data unit PDU session identifier.

8. The method according to claim 7, wherein the identification information further comprises at least one quality of service QoS flow identifier corresponding to the PDU session identifier.

9. The method according to claim 7 or 8, wherein the performing, by the terminal device, measurement based on the first information comprises:
determining, by the terminal device based on the first information, an application corresponding to the at least one network slice identifier; and
measuring, by the terminal device based on the application layer measurement configuration information, the application on a network slice corresponding to the at least one network slice identifier.

10. The method according to any one of claims 7 to 9, wherein the second information is sent in a form of a container.

11. The method according to any one of claims 7 to 10, wherein the application layer measurement result comprises a measurement result of at least one measurement metric; and
the measurement metric comprises at least one of the following metrics:
an average throughput metric, an initial playout delay metric, a buffer level metric, a playout delay metric, a corruption duration metric, a successive loss of packets metric, a jitter duration metric, a synchronization loss duration metric, a round-trip time metric, an average codec bitrate metric, a comparable quality viewpoint switching latency metric, or a freezing metric.

12. The method according to any one of claims 7 to 11, wherein the service type comprises at least one of the following types:
a multimedia telephony service type, a streaming media service type, a multimedia broadcast/multicast service type, a virtual reality service type, or an extended reality service type.

13. A network optimization method, comprising:
sending, by an access network device, first information to a terminal device, wherein the first information comprises application layer measurement configuration information, network slice scope information, and a service type, and the network slice scope information comprises at least one network slice identifier;
receiving, by the access network device, third information from the terminal device, wherein the third information comprises an application layer measurement result corresponding to the first information, identification information corresponding to the application layer measurement result, and service type information corresponding to the application layer measurement result, and the identification information comprises the network slice identifier; and
determining, by the access network device based on a first correspondence and a second correspondence, an identifier of at least one protocol data unit PDU session corresponding to the network slice identifier and the service type information, wherein the first correspondence indicates a correspondence between a network slice identifier and a PDU session identifier, and the second correspondence indicates a correspondence between a service type and a PDU session identifier.

14. The method according to claim 13, wherein the method further comprises:
optimizing, by the access network device based on the third information, radio resource configuration corresponding to the at least one PDU session.

15. The method according to claim 13 or 14, wherein the service type information comprises a service type corresponding to the application layer measurement result or a configuration identifier corresponding to the application layer measurement result, and the configuration identifier indicates the service type corresponding to the application layer measurement result; and
the determining, by the access network device based on a first correspondence and a second correspondence, at least one PDU session corresponding to the network slice identifier and the service type information comprises:
determining, by the access network device, at least one candidate PDU session identifier based on the first correspondence and the network slice identifier;
determining, by the access network device based on the service type or the configuration identifier, the service type corresponding to the application layer measurement result; and
determining, by the access network device based on the second correspondence, the at least one candidate PDU session identifier, and the service type corresponding to the application layer measurement result, the at least one PDU session identifier corresponding to the service type.

16. The method according to claim 14 or 15, wherein the second correspondence further indicates a correspondence among a service type, a PDU session identifier, and a QoS flow identifier;
before the optimizing, by the access network device based on the third information, radio resource configuration corresponding to at least one PDU session, the method further comprises:
determining, by the access network device based on the second correspondence, at least one QoS flow identifier corresponding to the at least one PDU session; and
determining, by the access network device, at least one data radio bearer DRB corresponding to the at least one QoS flow identifier; and
the optimizing, by the access network device based on the third information, radio resource configuration corresponding to at least one PDU session comprises:
optimizing, by the access network device, configuration of the at least one DRB corresponding to the at least one PDU session.

17. The method according to any one of claims 13 to 16, wherein before the sending, by an access network device, first information to a terminal device, the method further comprises:
receiving, by the access network device, the first correspondence from a core network device; and
receiving, by the access network device, the second correspondence from the core network device or a management device.

18. The method according to any one of claims 13 to 17, wherein the application layer measurement result comprises a measurement result of at least one measurement metric; and
the measurement metric comprises at least one of the following metrics:
an average throughput metric, an initial playout delay metric, a buffer level metric, a playout delay metric, a corruption duration metric, a successive loss of packets metric, a jitter duration metric, a synchronization loss duration metric, a round-trip time metric, an average codec bitrate metric, a comparable quality viewpoint switching latency metric, or a freezing metric.

19. The method according to any one of claims 13 to 18, wherein the service type comprises at least one of the following types:
a multimedia telephony service type, a streaming media service type, a multimedia broadcast/multicast service type, a virtual reality service type, or an extended reality service type.

20. A communication apparatus, comprising:
a sending module, configured to send first information to a terminal device, wherein the first information comprises application layer measurement configuration information, network slice scope information, and a service type, and the network slice scope information comprises at least one network slice identifier; and
a receiving module, configured to receive second information from the terminal device, wherein the second information comprises an application layer measurement result corresponding to the first information and identification information corresponding to the application layer measurement result, and the identification information comprises an identifier of a protocol data unit PDU session.

21. The apparatus according to claim 20, wherein the apparatus further comprises:
a processing module, configured to optimize, based on the second information, radio resource configuration corresponding to the PDU session.

22. The apparatus according to claim 21, wherein the identification information further comprises at least one quality of service QoS flow identifier corresponding to the PDU session identifier; and
the processing module is configured to: determine at least one data radio bearer DRB corresponding to the at least one QoS flow identifier; and
optimize configuration of the at least one DRB corresponding to the PDU session.

23. The apparatus according to claim 20, wherein the second information is sent in a form of a container; and
the processing module is configured to:
decode the second information to obtain the application layer measurement result and the identification information.

24. The apparatus according to any one of claims 20 to 23, wherein the application layer measurement result comprises a measurement result of at least one measurement metric; and
the measurement metric comprises at least one of the following metrics:
an average throughput metric, an initial playout delay metric, a buffer level metric, a playout delay metric, a corruption duration metric, a successive loss of packets metric, a jitter duration metric, a synchronization loss duration metric, a round-trip time metric, an average codec bitrate metric, a comparable quality viewpoint switching latency metric, or a freezing metric.

25. The apparatus according to any one of claims 20 to 24, wherein the service type comprises at least one of the following types:
a multimedia telephony service type, a streaming media service type, a multimedia broadcast/multicast service type, a virtual reality service type, or an extended reality service type.

26. A communication apparatus, comprising:
a receiving module, configured to receive first information from an access network device, wherein the first information comprises application layer measurement configuration information, a network slice scope, and a service type, and the network slice scope comprises at least one network slice identifier;
a processing module, configured to perform application layer measurement based on the first information, to obtain an application layer measurement result; and
a sending module, configured to send second information to the access network device, wherein the second information comprises the application layer measurement result and identification information corresponding to the application layer measurement result, and the identification information comprises a protocol data unit PDU session identifier.

27. The apparatus according to claim 26, wherein the identification information further comprises at least one quality of service QoS flow identifier corresponding to the PDU session identifier.

28. The apparatus according to claim 26 or 27, wherein the processing module is configured to:
determine, based on the first information, an application corresponding to the at least one network slice identifier; and
measure, based on the application layer measurement configuration information, the application on a network slice corresponding to the at least one network slice identifier.

29. The apparatus according to any one of claims 26 to 28, wherein the second information is sent in a form of a container.

30. The apparatus according to any one of claims 26 to 29, wherein the application layer measurement result comprises a measurement result of at least one measurement metric; and
the measurement metric comprises at least one of the following metrics:
an average throughput metric, an initial playout delay metric, a buffer level metric, a playout delay metric, a corruption duration metric, a successive loss of packets metric, a jitter duration metric, a synchronization loss duration metric, a round-trip time metric, an average codec bitrate metric, a comparable quality viewpoint switching latency metric, or a freezing metric.

31. The apparatus according to any one of claims 26 to 30, wherein the service type comprises at least one of the following types:
a multimedia telephony service type, a streaming media service type, a multimedia broadcast/multicast service type, a virtual reality service type, or an extended reality service type.

32. A communication apparatus, comprising:
a sending module, configured to send first information to a terminal device, wherein the first information comprises application layer measurement configuration information, network slice scope information, and a service type, and the network slice scope information comprises at least one network slice identifier;
a receiving module, configured to receive third information from the terminal device, wherein the third information comprises an application layer measurement result corresponding to the first information, identification information corresponding to the application layer measurement result, and service type information corresponding to the application layer measurement result, and the identification information comprises the network slice identifier; and
a processing module, configured to determine, based on a first correspondence and a second correspondence, an identifier of at least one protocol data unit PDU session corresponding to the network slice identifier and the service type information, wherein the first correspondence indicates a correspondence between a network slice identifier and a PDU session identifier, and the second correspondence indicates a correspondence between a service type and a PDU session identifier.

33. The apparatus according to claim 32, wherein the processing module is configured to:
optimize, based on the third information, radio resource configuration corresponding to the at least one PDU session.

34. The apparatus according to claim 32 or 33, wherein the service type information comprises a service type corresponding to the application layer measurement result or a configuration identifier corresponding to the application layer measurement result, and the configuration identifier indicates the service type corresponding to the application layer measurement result; and
the processing module is configured to:
determine at least one candidate PDU session identifier based on the first correspondence and the network slice identifier;
determine, based on the service type or the configuration identifier, the service type corresponding to the application layer measurement result; and
determine, based on the second correspondence, the at least one candidate PDU session identifier, and the service type corresponding to the application layer measurement result, the at least one PDU session identifier corresponding to the service type.

35. The apparatus according to claim 33 or 34, wherein the second correspondence further indicates a correspondence among a service type, a PDU session identifier, and a QoS flow identifier; and
the processing module is configured to:
determine, based on the second correspondence, at least one QoS flow identifier corresponding to the at least one PDU session;
determine at least one data radio bearer DRB corresponding to the at least one QoS flow identifier; and
optimize configuration of the at least one DRB corresponding to the at least one PDU session.

36. The apparatus according to any one of claims 32 to 35, wherein the receiving module is configured to:
receive the first correspondence from a core network device; and
receive the second correspondence from the core network device or a management device.

37. The apparatus according to any one of claims 32 to 36, wherein the application layer measurement result comprises a measurement result of at least one measurement metric; and
the measurement metric comprises at least one of the following metrics:
an average throughput metric, an initial playout delay metric, a buffer level metric, a playout delay metric, a corruption duration metric, a successive loss of packets metric, a jitter duration metric, a synchronization loss duration metric, a round-trip time metric, an average codec bitrate metric, a comparable quality viewpoint switching latency metric, or a freezing metric.

38. The apparatus according to any one of claims 32 to 37, wherein the service type comprises at least one of the following types:
a multimedia telephony service type, a streaming media service type, a multimedia broadcast/multicast service type, a virtual reality service type, or an extended reality service type.

39. A communication apparatus, comprising a processor, wherein the processor is coupled to a memory, the memory stores computer-executable instructions, and the processor executes the computer-executable instructions stored in the memory, so that the processor performs the method according to any one of claims 1 to 6, or performs the method according to any one of claims 7 to 12, or performs the method according to any one of claims 13 to 19.

40. A computer-readable storage medium, configured to store a computer program, wherein the computer program comprises instructions used to perform the method according to any one of claims 1 to 6, instructions used to perform the method according to any one of claims 7 to 12, or instructions used to perform the method according to any one of claims 13 to 19.

41. A computer program product, wherein the computer program product comprises computer program code; and when the computer program code is run on a computer, the computer is enabled to perform the method according to any one of claims 1 to 6, or perform the method according to any one of claims 7 to 12, or perform the method according to any one of claims 13 to 19.
